(19) **Europäisches Patentamt / European Patent Office / Office européen des brevets**

(11) **EP 2 942 959 A1**

(12) # EUROPEAN PATENT APPLICATION

(43) Date of publication:
**11.11.2015 Bulletin 2015/46**

(21) Application number: **15167974.3**

(22) Date of filing: **07.06.2011**

(51) Int Cl.:
*H04N 19/119* (2014.01)       *H04N 19/14* (2014.01)
*H04N 19/176* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2010  KR 20100053186**

(62) Document number(s) of the earlier application(s) in accordance with Art. 76 EPC:
**11792669.1 / 2 579 598**

(71) Applicant: **HUMAX Holdings Co., Ltd.
Yongin-si, Gyeonggi-do 449-934 (KR)**

(72) Inventors:
  • **Yie, Chungku
    403-762 Incheon (KR)**
  • **Kim, Min Sung
    431-719 Anyang-si, Gyeonggi-do (KR)**
  • **Park, Joon Seong
    448-991 Yongin-si, Gyeonggi-do (KR)**

(74) Representative: **Vossius & Partner
Patentanwälte Rechtsanwälte mbB
Siebertstrasse 3
81675 München (DE)**

Remarks:
This application was filed on 18-05-2015 as a divisional application to the application mentioned under INID code 62.

(54) **APPARATUS FOR DECODING HIGH-RESOLUTION IMAGES**

(57)     The invention provides an image decoding apparatus comprising an entropy decoder that decodes a received bit stream to generate header information; a motion compensation unit that generates a prediction block by performing motion compensation on the prediction unit based on information of the prediction unit obtained from the header information, wherein the prediction unit has variable size; an inverse quantization unit that inverse quantizes the received bit stream; an inverse transform unit that obtains a residual value by performing inverse transforming on inverse quantized data; and an adder that adds the residual value to the prediction block to reconstruct an image, wherein the prediction unit corresponds to a leaf coding unit when a coding unit is split and reaches an allowable largest hierarchy depth, and the coding unit has a recursive tree structure, and wherein a partition splitting is achieved by an asymmetric partitioning when the prediction unit is split.

FIG. 3

**EP 2 942 959 A1**

**Description**

[Technical Field]

The present invention relates to encoding and decoding an image, and more specifically, to an encoding method that may be applicable to high-definition images and an encoding apparatus that performs the encoding method, and a decoding method and a decoding apparatus that performs the decoding method.

[Background art]

In general, an image compression method performs encoding with one picture divided into a plurality of blocks having a predetermined size. Further, inter prediction and intra prediction technologies are used to remove duplicity between pictures so as to increase compression efficiency.

A method of encoding images by using inter prediction compresses images by removing temporal duplicity between pictures, and a representative example thereof is a motion compensation prediction encoding method.

The motion compensation prediction encoding generates a motion vector by searching a region similar to a currently encoded block in at least one reference picture positioned before or behind a currently encoded picture, performs DCT (Discrete Cosine Transform), quantization, and then entropy encoding on a residual value between a current block and a prediction block obtained by performing motion compensation using the generated motion vector and then transmits the result.

Conventionally, a macroblock used for motion compensation prediction may have various sizes, such as 16x16, 8x16, or 8x8 pixels, and for transform and quantization, a block having a size of 8x8 or 4x4 pixels is used.

However, the existing block size used for transform and quantization or motion compensation as described above is not appropriate for encoding of high-resolution images having a resolution of HD (High Definition) or more.

Specifically, in the case of a small screen displaying low-resolution images, it may be more efficient in terms of accuracy of motion prediction and bitrate to perform motion prediction and compensation using a small-size block, but in case motion prediction and compensation are performed on a high-resolution, large-screen image on the basis of a block having a size of 16x16 or less, the number of blocks included in one picture is exponentially increased, so that the load of encoding processing and the amount of data compressed increase, thus resulting in an increase in the transmission bitrate.

Further, as the resolution of an image increases, areas with little detail or with no deviation are expanded as well. Accordingly, when a block having a size of 16x16 pixels is used to perform motion prediction and compensation as in the conventional methods, encoding noise is increased.

[Disclosure]

[Technical Problem]

A first object of the present invention is to provide an image encoding and decoding method that may enhance encoding efficiency for high-resolution images.
Further, a second object of the present invention is to provide an image encoding and decoding apparatus that may enhance encoding efficiency for high-resolution images.

[Technical solutions]

To achieve the first object of the present invention, an image encoding method according to an aspect of the present invention includes the steps of receiving at least one picture to be encoded, determining a size of a to-be-encoded block based on a temporal frequency characteristic between the received at least one picture, and encoding a block having the determined size.
To achieve the first object of the present invention, an image encoding method according to another aspect of the present invention includes the steps of generating a prediction block by performing motion compensation on a prediction unit having a size of NxN pixels, wherein N is a power of 2, obtaining a residual value by comparing the prediction unit with the prediction block, and performing transform on the residual value. The prediction unit may have an extended macroblock size. The prediction unit may correspond to a leaf coding unit when a coding unit having a variable size is hierarchically split and reaches an allowable largest hierarchy level or hierarchy depth, and wherein the image encoding method may further includes the step of transmitting a sequence parameter set (SPS) including a size of a largest coding unit and a size of a smallest coding unit. The step of performing transform on the residual value may be the step of performing DCT (Discrete Cosine Transform) on an extended macroblock. N may be a power of 2, and N may be not less than 8 and not more than 64.
To achieve the first object of the present invention, an image encoding method according to still another aspect of the present invention includes the steps of receiving at least one picture to be encoded, determining a size of a to-be-encoded prediction unit based on a spatial frequency characteristics of the received at least one picture, wherein the size of the prediction unit is NxN pixels and N is a power of 2, and encoding a prediction unit having the determined size.
To achieve the first object of the present invention, an image encoding method according to yet still another aspect of the present invention includes the steps of receiving an extended macroblock having a size of NxN pixels, wherein N is a power of 2, detecting a pixel belonging to an edge among blocks peripheral to the received extended macroblock, splitting the extended macroblock into at least one partition based on the pixel belonging to the detected edge, and performing encoding on a predetermined partition of the split at least one partition.

To achieve the first object of the present invention, an image decoding method according to an aspect of the present invention includes the steps of receiving an encoded bit stream, obtaining size information of a to-be-decoded prediction unit from the received bit stream, wherein a size of the prediction unit is NxN pixels and N is a power of 2, obtaining a residual value by performing inverse quantization and inverse transform on the received bit stream, generating a prediction block by performing motion compensation on a prediction unit having a size corresponding to the obtained size information, and reconstructing an image by adding the generated prediction block to the residual value. Here, the prediction unit may have an extended macroblock size. The step of transforming the residual value may be the step of performing inverse DCT (Discrete Cosine Transform) on the extended macroblock. The prediction unit may have a size of NxN pixels, wherein N may be a power of 2 and N may benot less than 8 and not more than 64. The prediction unit may be a leaf coding unit when a coding unit having a variable size may be hierarchically split reaches an allowable largest hierarchy level or hierarchy depth. The method may further include the step of obtaining partition information of the to-be-encoded prediction unit from the received bit stream. The step of generating the prediction block by performing motion compensation on the prediction unit having the size corresponding to the obtained size information of the prediction unit may include the step of performing partitioning on the prediction unit based on the partition information of the prediction unit and performing the motion compensation on a split partition. The partitioning may be performed in an asymmetric partitioning scheme. The partitioning may be performed in a geometrical partitioning scheme having a shape other than square. The partitioning is performed in an along-edge-direction partitioning scheme. The along-edge-direction partitioning scheme includes the steps of detecting a pixel belonging to an edge among blocks peripheral to the prediction unit and splitting the prediction unit into at least one partition based on a pixel belonging to the detected edge. The partitioning along edge direction may be applicable to inter prediction. Further, to achieve the first object of the present invention, an image decoding method according to another aspect of the present invention includes the steps of receiving an encoded bit stream, size information and partition information of a to-be-decoded macroblock from the received bit stream, performing inverse quantization and inverse transform on the received bit stream to obtain a residual value, splitting the extended macroblock having any one size of 32x32 pixels, 64x64 pixels, and 128x128 pixels into at least one partition based on the obtained macroblock size information and partition information, generating a prediction partition by performing motion compensation on a predetermined partition of the split at least one partition, and adding the generated prediction partition to the residual value to thereby reconstruct an image.

To achieve the second object of the present invention, an image encoding apparatus according to an aspect of the present invention includes a prediction unit determination unit that receives at least one picture to be encoded and determines a size of a to-be-encoded prediction unit based on a temporal frequency characteristics between the received at least one picture or based on a spatial frequency characteristics between the received at least one picture and an encoder that encodes a prediction unit having the determined size.

To achieve the second object of the present invention, an image decoding apparatus according to an aspect of the present invention includes an entropy decoder that decodes a received bit stream to generate header information, a motion compensation unit that generates a prediction block by performing motion compensation on the prediction unit based on size information of the prediction unit obtained from the header information, wherein the size of the prediction unit is NxN pixels and N is a power of 2, an inverse quantization unit that inverse-quantizes the received bit stream, an inverse transform unit that obtains a residual value by performing inverse transform on the inverse quantized data, and an adder that adds the residual value to the prediction block to reconstruct an image. The prediction unit may have an extended macroblock size. The inverse transform unit may perform inverse DCT (Discrete Cosine Transform) on an extended macroblock. The prediction unit may have a size of NxN pixels, wherein N may be a power of 2 and N may be not less than 4 and not more than 64. The prediction unit may correspond to a leaf coding unit when a coding unit having a variable size is hierarchically split and reaches an allowable largest hierarchy level or hierarchy depth. The motion compensation unit may perform the motion compensation on the split partition by performing partitioning on the prediction unit based on the partition information of the prediction unit. The partitioning may be performed in an asymmetric partitioning scheme. The partitioning may be performed in a geometrical partitioning scheme having a shape other than square. The partitioning may be performed along edge direction. The image decoding apparatus may further include an intra prediction unit that performs intra prediction along the edge direction on a prediction unit having a size corresponding to the obtained size information of the prediction unit.

[Advantageous Effects]

According to the above-described high-resolution image encoding/decoding methods and apparatuses performing the methods, the size of a to-be-encoded coding unit or prediction unit is configured to 32x32 pixels, 64x64 pixels, or 128x128 pixels, and motion prediction and motion compensation and transform are performed on the basis of the configured prediction unit size. Further, the prediction unit having a size of 32x32 pixels, 64x64 pixels, or 128x128 pixels is split into at least one partition based on an edge and then encoded.

In the case of having high homogeneity or uniformity, such as at the region where energy is concentrated on the low frequencies or at the region having the same color, the coding unit or the prediction unit is applied to encoding/decoding with the size of coding unit or the prediction unit further expanded to 32x32, 64x64, or 128x128 pixels, which corresponds to the size of an extended macroblock, so that it may be possible to increase encoding/decoding efficiency of large-screen images having a resolution of HD, ultra HD or more.

Further, encoding/decoding efficiency may be raised by increasing or decreasing the extended macroblock size or the size of the coding unit or the size of the prediction unit with respect to a pixel region according to temporal frequency characteristics (e.g., changes between previous and current screens or degree of movement) for large screen.

Accordingly, it may be possible to enhance efficiency of encoding large-screen images having a resolution of HD, ultra HD or more and to reduce encoding noise at regions having high homogeneity and uniformity.

[Description of Drawings]

Fig. 1 is a flowchart illustrating an image encoding method according to an embodiment of the present invention.

Fig. 2 is a conceptual view illustrating a recursive coding unit structure according to another example embodiment of the present invention.

Fig. 3 is a conceptual view illustrating asymmetric partitioning according to an embodiment of the present invention.

Figs. 4a to 4c are conceptual views illustrating a geometrical partitioning scheme according to embodiments of the present invention.

Fig. 5 is a conceptual view illustrating motion compensation on boundary pixels positioned on the boundary line in the case of geometrical partitioning.

Fig. 6 is a flowchart illustrating an image encoding method according to another example embodiment of the present invention.

Fig. 7 is a conceptual view illustrating the partitioning process shown in Fig. 6.

Fig. 8 is a conceptual view illustrating an example where edge-considered partitioning is applied to intra prediction.

Fig. 9 is a flowchart illustrating an image encoding method according to still another example embodiment of the present invention.

Fig. 10 is a flowchart illustrating an image encoding method according to yet still another example embodiment of the present invention.

Fig. 11 is a flowchart illustrating an image decoding method according to an embodiment of the present invention.

Fig. 12 is a flowchart illustrating an image decoding method according to another example embodiment of the present invention.

Fig. 13 is a block diagram illustrating a configuration of an image encoding apparatus according to an embodiment of the present invention.

Fig. 14 is a block diagram illustrating a configuration of an image encoding apparatus according to another example embodiment of the present invention.

Fig. 15 is a block diagram illustrating a configuration of an image decoding apparatus according to an embodiment of the present invention.

Fig. 16 is a block diagram illustrating a configuration of an image decoding apparatus according to another example embodiment of the present invention.

[Best mode]

Various modifications may be made to the present invention and the present invention may have a number of embodiments. Specific embodiments are described in detail with reference to the drawings.

However, the present invention is not limited to specific embodiments, and it should be understood that the present invention includes all modifications, equivalents, or replacements that are included in the spirit and technical scope of the present invention.

The terms "first" and "second" may be used to describe various components, but the components are not limited thereto. These terms are used only to distinguish one component from another. For example, the first component may be also named the second component, and the second component may be similarly named the first component. The term "and/or" includes a combination of a plurality of related items as described herein or any one of the plurality of related items.

When a component is "connected" or "coupled" to another component, the component may be directly connected or coupled to the other component. In contrast, when a component is directly connected or coupled to another component, no component intervenes.

The terms used herein are given to describe the embodiments but not intended to limit the present invention. A singular term includes a plural term unless otherwise stated. As used herein, the terms "include" or "have" are used to indicate that there are features, numerals, steps, operations, components, parts or combinations thereof as described herein, but do not exclude the presence or possibility of addition of one or more features, numerals, steps, operations, components, parts or components thereof.

Unless defined otherwise, all the terms used herein including technical or scientific terminology have the same meaning as are generally understood by those skilled in the art. Such terms as defined in the dictionary as commonly used should be construed to have the same meanings as those understood in the context of the related technology, and unless otherwise defined, should not be understood ideally or too formally.

Hereinafter, preferred embodiments of the present invention will be described in greater detail with reference to the accompanying drawings. For ease of description, the same reference numerals are used to denote the same components throughout the specification and the drawings, and the description thereof is not repeated.

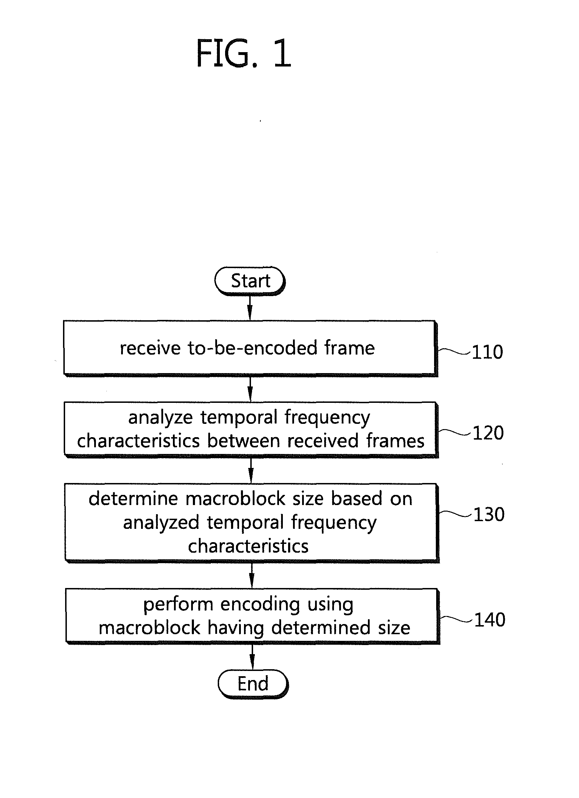

Fig. 1 is a flowchart illustrating an image encoding method according to an embodiment of the present invention. Fig. 1 illustrates a method of determining the size of a macroblock according to temporal frequency characteristics of an image and then performing motion compensation encoding using the macroblock having the determined size.

Referring to Fig. 1, the encoding apparatus receives a to-be-encoded frame (or picture) (step 110) The received to-be-encoded frame (or picture) may be stored in a buffer that may store a predetermined number of frames. For example, the buffer may store at least four (n-3th, n-2th, n-1th and nth) frames.

Thereafter, the encoding apparatus analyzes the temporal frequency characteristics of the received frame (or picture) (step 120). For example, the encoding apparatus may detect a variation between the n-3th frame and the n-2th frame stored in the buffer, may detect a variation between the n-2th frame and the n-1th frame, and may detect a variation between the n-1th frame and the nth frame to thereby analyze the inter-frame temporal frequency characteristics.

Then, the encoding apparatus compares the analyzed temporal frequency characteristics with a preset threshold and determines the size of the to-be-encoded macroblock based on a result of the comparison (step 130). Here, the encoding apparatus may determine the size of the macroblock based on the variation between two frames (e.g., n-1th and nth frames) temporally peripheral to each other among the frames stored in the buffer and may determine the size of the macroblock based on the variation characteristics of a predetermined number of frames (e.g., n-3th, n-2th, n-1th, and nth) in order to reduce the overhead for the macroblock size information.

For example, the encoding apparatus may analyze the temporal frequency characteristics of the n-1th frame and the nth frame, and in case the analyzed temporal frequency characteristic value is less than a preset first threshold, determines the size of the macroblock as 64x64 pixels, and in case the analyzed temporal frequency characteristic value is not less than the preset first threshold and less than a second threshold, determines the size of the macroblock as 32x32 pixels, and in case the analyzed temporal frequency characteristic value is not less than the preset second threshold, determines the size of the macroblock as 16x16 pixels or less. Here, the first threshold represents a temporal frequency characteristic value in case the inter-frame variation is smaller than the second threshold. Hereinafter, the extended macroblock is defined as a macroblock having a size of 32x32 pixels or more. The extended macroblock may have a size of 32x32 pixels or more, i.e., 64x64 pixels, 128x128 pixels or more, to be appropriate for a high resolution such as ultra HD or more.

The size of the to-be-encoded macroblock may have a predetermined value per picture or per GOP (Group of Picture) based on the result of analyzing the temporal frequency characteristics of the received frame (or picture).

Alternatively, the size of the to-be-encoded macroblock may have a predetermined value per picture or per GOP (Group of Picture) irrespective of the result of analyzing the temporal frequency characteristics of the received frame (or picture).

If the size of the macroblock is determined in step 130, the encoding apparatus performs encoding on the basis of the macroblock having the determined size (step 140).

For example, if the size of the macroblock is determined to be 64x64 pixels, the encoding apparatus obtains a motion vector by performing motion prediction on the current macroblock having a size of 64x64 pixels, generates a prediction block by performing motion compensation using the obtained motion vector, transforms, quantizes, and entropy-encodes a residual value that is a difference between the generated prediction block and the current macroblock, and then transmits the result. Further, information on the determined size of the macroblock and the information on the motion vector are also subjected to entropy encoding and then transmitted.

In some embodiments of the present invention to be described hereinafter, per-extended macroblock encoding processing may be done according to the size of the macroblock determined by an encoding controller (not shown) or a decoding controller (not shown), and as described above, may be applicable to all or only at least one of the motion compensation encoding, transform, and quantization. Further, the above-mentioned per-extended macroblock encoding processing may be also applicable to decoding processing in some embodiments of the present invention to be described below.

As illustrated in Fig. 1, in the image encoding method according to an embodiment of the present invention, the macroblock is used for encoding, with the size of the macroblock increased in case there is a small variation between input frames (or pictures) (that is, in case the temporal frequency is low), and with the size of the macroblock decreased in case there is a large variation between input frames (or pictures) (that is, in case the time frequency is high), so that encoding efficiency may be enhanced.

The above-described image encoding/decoding methods according to the temporal frequency characteristics may be applicable to high resolutions, such as ultra HD larger in resolution than HD, or more. Hereinafter, the macroblock means an extended macroblock or a macroblock only with an existing size of 32x32 pixels or less.

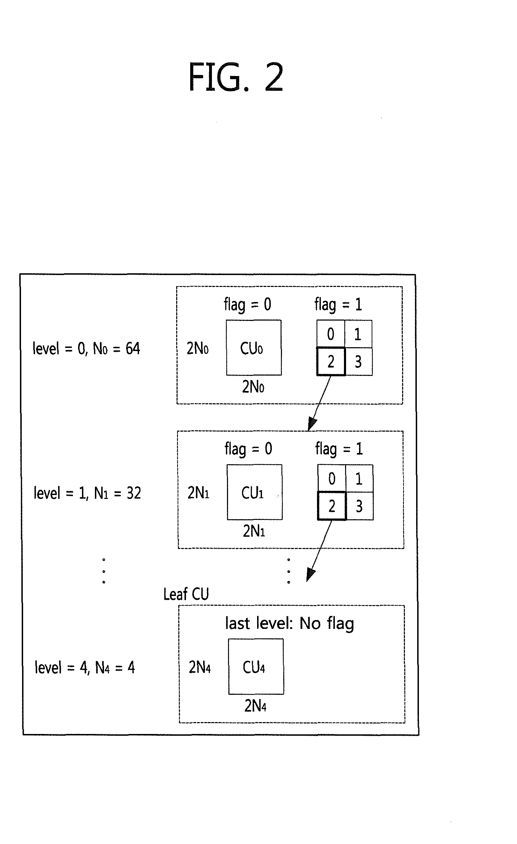

Meanwhile, according to another example embodiment of the present invention, instead of methods of performing encoding and decoding using the extended macroblock and the size of the extended macroblock, recursive coding unit (CU) may be used to perform encoding and decoding. Hereinafter, the structure of a recursive coding unit is described according to another example embodiment of the present invention with reference to Fig. 2.

Fig. 2 is a conceptual view illustrating a recursive coding unit structure according to another example embodiment of the present invention.

Referring to Fig. 2, each coding unit CU has a square shape, and each coding unit CU may have a variable size, such as 2NX2N (unit pixel). Inter prediction, intra prediction, transform, quantization, and entropy encoding may be performed in a unit of a coding unit. The coding unit CU may include a largest coding unit LCU and a smallest coding unit SCU. The size of the largest coding unit LCU and the smallest coding unit SCU may be represented as a power of 2 which is 8 or more.

The coding unit CU according to another example embodiment of the present invention may have a recursive tree structure. Fig. 2 illustrates an example where the size ($2N_0$) of an edge of $CU_0$ which is the largest coding unit LCU is 128 ($N_0$=64), and the largest hierarchy level or hierarchy depth is 5. The recursive structure may be represented through a series of flags. For example, in case the flag value of coding unit $CU_k$ with a hierarchy level or hierarchy depth of k is 0, coding on the coding unit $CU_k$ is done with respect to the current hierarchy level or hierarchy depth, and in case the flag value is 1, the coding unit $CU_k$ with a current hierarchy level or hierarchy depth of k is split into four independent coding units $CU_{k+1}$, which have a hierarchy level or hierarchy depth of k+1 and a size of $N_{k+1}XN_{k+1}$. In such case, the coding unit $CU_{k+1}$ may be represented as a sub coding unit of the coding unit $CU_k$. Until the hierarchy level or hierarchy depth of the coding unit $CU_{k+1}$ reaches the allowable largest hierarchy level or hierarchy depth, the coding unit $CU_{k+1}$ may be recursively processed. In case the hierarchy level or hierarchy depth of the coding unit $CU_{k+1}$ is the same as the allowable largest hierarchy level or hierarchy depth-e.g., 4 in Fig. 2, the splitting is not further performed.

The size of the largest coding unit LCU and the size of the smallest coding unit SCU may be included in a sequence parameter set (SPS). Alternatively, the size of the smallest coding unit SCU may be included in a sequence parameter set (SPS). The size of the smallest coding unit may represents .a minimum size of a luma coding unit(or coding block) The sequence parameter set SPS may include the allowable largest hierarchy level or hierarchy depth of the largest coding unit LCU. Alternatively, sequence parameter set (SPS) may include the minimum size of a luma coding unit(or coding block) and.the difference between the maximum size and the minimum size of luma coding unit(or coding block). For example, in the case shown in Fig. 2, the allowable largest hierarchy level or hierarchy depth is 5, and in case the size of an edge of the largest coding unit LCU is 128 (unit: pixel), five types of coding unit CU sizes are possible, such as 128x128 (LCU), 64x64, 32x32, 16x16, and 8x8 (SCU). That is, given the size of the largest coding unit LCU and the allowable largest hierarchy level or hierarchy depth, the size of the allowable coding unit CU may be determined.

The use of the recursive coding unit structure according to the embodiment of the present invention as described above may provide the following advantages.

First, a larger size than the existing 16x16 macroblock may be supported. If an image region of interest remains homogeneous, the largest coding unit LCU may represent the image region of interest with a smaller number of symbols than when a number of small blocks are used.

Second, some largest coding units LCU having various sizes may be supported compared with when a fixed size of macroblock is used, so that the codec may be easily optimized for various contents, applications, and apparatuses. That is, the hierarchical block structure may be further optimized to a target application by properly selecting the largest coding unit LCU size and the largest hierarchy level or the largest hierarchy depth.

Third, irrespective of whether it is a macroblock, sub macroblock, or extended macroblock, a single unit type, i.e., coding unit (LCU), is used, so that the multilevel hierarchical structure may be very simply represented by using the largest coding unit LCU size, the largest hierarchy level (or largest hierarchy depth) and a series of flags. When used together with a size-independent syntax representation, it is sufficient to specify a syntax item of a generalized size for the remaining coding tools, and such consistency may simplify the actual parsing process. The largest value of the hierarchy level (or largest hierarchy depth) may be any value, and may be larger than a value allowed in the existing H.264/AVC encoding scheme. By using the size-independent syntax representation, all syntax elements may be specified in a consistent manner independently from the size of the coding unit CU. The splitting process for the coding unit CU may be recursively specified, and other syntax elements for the leaf coding unit-last coding unit of the hierarchy level-may be defined to have the same size irrespective of the size of the coding unit. The above-described representation scheme is effective in reducing parsing complexity and may enhance clarity of representation in case a large hierarchy level or hierarchy depth is allowed.

If the above-described hierarchical splitting process is complete, no further splitting is done while inter prediction or intra prediction may be performed on the leaf node of the coding unit hierarchical tree. Such leaf coding unit is used for a prediction unit (PU) that is a basic unit for inter prediction or intra prediction.

Partitioning is performed on the leaf coding unit so as to perform inter prediction or intra prediction. That is, such partitioning is done on the prediction unit PU. Here, the prediction unit PU means a basic unit for inter prediction or intra prediction and may be the existing macroblock unit or sub macroblock unit or an extended macroblock unit having a size of 32x32 pixels.

The above-mentioned partitioning for inter prediction or intra prediction may be performed in an asymmetric partitioning manner, in a geometrical partitioning manner having any shape other than square, or in an along-edge-direction partitioning manner. Hereinafter, partitioning schemes according to embodiments of the present invention are specifically described.

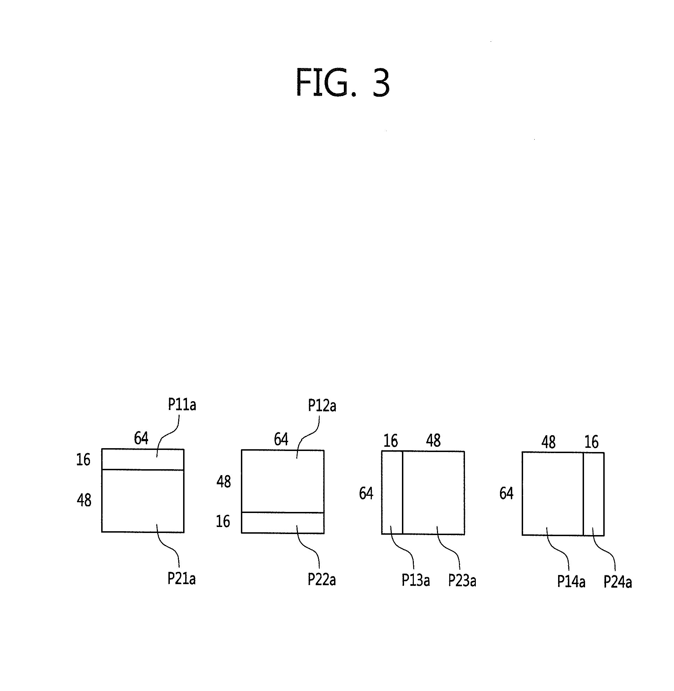

Fig. 3 is a conceptual view illustrating asymmetric partitioning according to an embodiment of the present invention.

In case the size of a prediction unit PU for inter prediction or intra prediction may be variable such as MXM (M is a natural number and its unit is pixels), asymmetric partitioning is performed along the horizontal or vertical direction of the coding unit, thereby to obtain asymmetric partitions shown in Fig. 3. In Fig. 3, the size of the prediction unit PU is, e.g., 64x64 pixels. The partitioning is performed in an asymmetric partitioning scheme.

Referring to Fig. 3, the prediction unit may be subjected to asymmetric partitioning along the horizontal direction and may be thus split into a partition P11a having a size of 64x16 and a partition P21a having a size of 64x48, or into a partition P12a having a size of 64x48 and a partition P22a having a size of 64x16. Alternatively, the prediction unit may be subjected to asymmetric partitioning along the vertical direction and may be thus split into a partition P13a having a size of 16x64 and a partition P23a having a size of 48X64 or into a partition P14a having a size of 48X64 and a partition P24a having a size of 16X64.

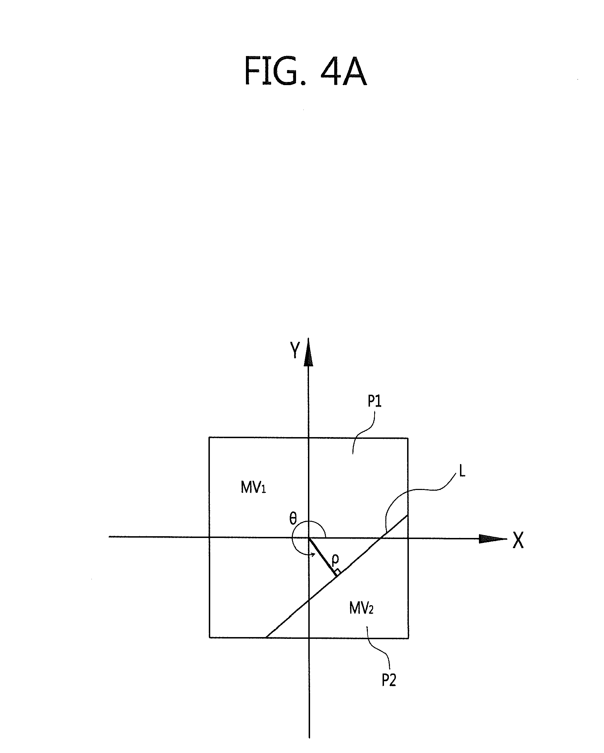

Figs. 4a to 4c are conceptual views illustrating a geometrical partitioning scheme according to embodiments of the present invention.

Fig. 4a illustrates an embodiment where geometrical partitioning having a shape other than square is performed on a prediction unit PU.

Referring to Fig. 4a, the boundary line L of the geometrical partition may be defined as follows with respect to the prediction unit PU. The prediction unit PU is equally divided into four quadrants with respect to the center O of the prediction unit PU by using X and Y axes, and a perpendicular line is drawn from the center O to the boundary line L, so that all boundary lines extending in any direction may be specified by vertical distance p between the center O of the prediction unit PU to the boundary line L and a rotational angle θ made counterclockwise from the X axis to the perpendicular line.

For example, in the case of an 8x8 block, 34 modes may be used to perform intra prediction. Here, the 34 modes may represent the maximum of 34 directions having a slope of dx along the horizontal direction and dy along the vertical direction (dx and dy each are a natural number) in any pixel in the current block.

Alternatively, depending on the block size, a different number of intra modes may be used. For example, 9 intra modes may be used for a 4x4 block, 9 intra modes for an 8x8 block, 34 intra modes for a 16x16 block, 34 intra modes for a 32x32 block, 5 intra modes for a 64x64 block, and 5 intra modes for a 128x128 block.

Alternatively, 17 intra modes may be used for a 4x4 block, 34 intra modes for an 8x8 block, 34 intra modes for a 16x16 block, 34 intra modes for a 32x32 block, 5 intra modes for a 64x64 block, and 5 intra modes for a 128x128 block.

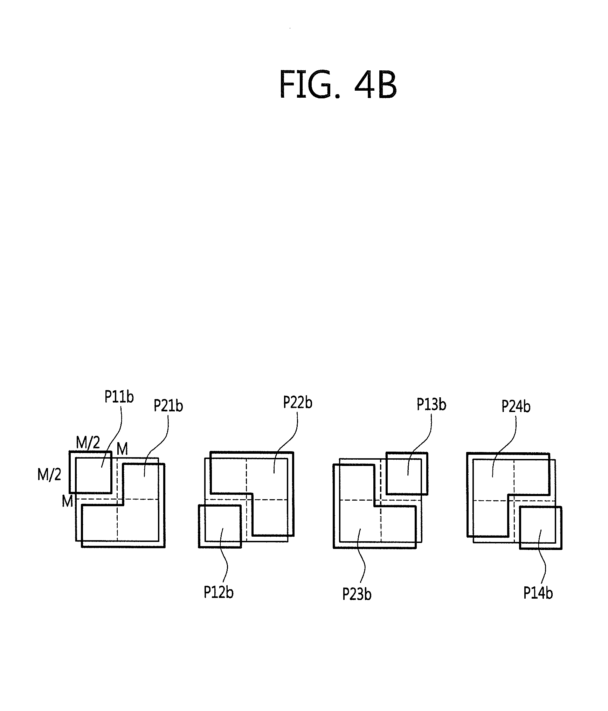

Fig. 4b illustrates another example embodiment where geometrical partitioning having a shape other than square is performed on a prediction unit PU.

Referring to Fig. 4b, the prediction unit PU for inter prediction or intra prediction is equally divided into four quadrants with respect to the center of the prediction unit PU so that the second-quadrant, top and left block is a partition P11 b and the L-shaped block consisting of the remaining first, third, and fourth quadrants is a partition P21b. Alternatively, splitting may be done so that the third quadrant, bottom and left block is a partition P12b, and the block consisting of the remaining first, second, and fourth quadrants is a partition P22b. Alternatively, splitting may be done so that the first quadrant, top and right block is a partition P13b, and the block consisting of the remaining second, third, and fourth quadrants is a partition P23b. Alternatively, the prediction unit PU may be split so that the fourth quadrant, bottom and right block is a partition P14b and the block consisting of the remaining first, second, and third quadrants is a partition P24b.

If L-shape partitioning is performed as described above, in case, upon partitioning, a moving object is present in an edge block, i.e., the top and left, bottom and left, top and right, or bottom and right block, more effective encoding may be achieved than when partitioning is done to provide four blocks. Depending on which edge block in the four partitions the moving object is positioned, the corresponding partition may be selected and used.

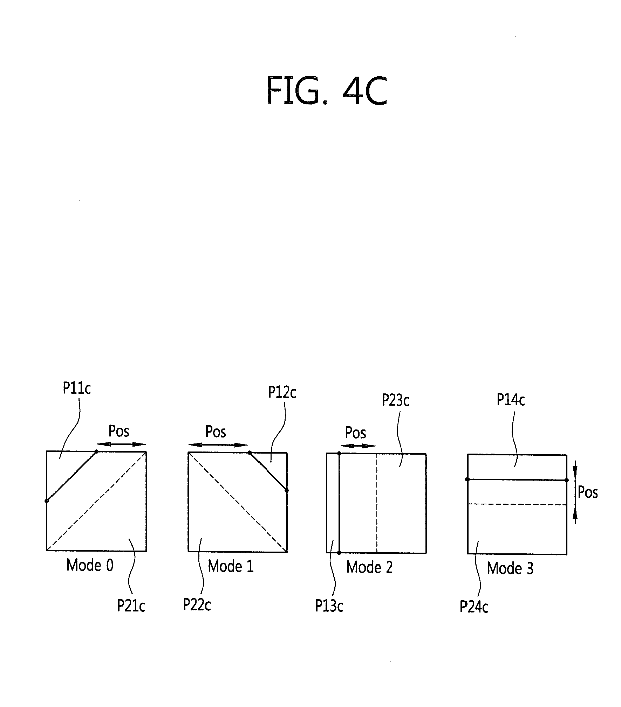

Fig. 4c illustrates still another example embodiment where geometrical partitioning having a shape other than square is performed on a prediction unit PU.

Referring to Fig. 4c, the prediction unit PU for inter prediction or intra prediction may be split into two different irregular regions (modes 0 and 1) or into rectangular regions of different sizes (modes 2 and 3).

Here, parameter 'pos' is used to indicate the position of a partition boundary. In the case of mode 0 or 1, 'pos' refers to a horizontal distance from a diagonal line of the prediction unit PU to a partition boundary, and in the case of mode 2 or 3, 'pos' refers to a horizontal distance between a vertical or horizontal bisector of the prediction unit PU to a partition boundary. In the case shown in Fig. 4c, mode information may be transmitted to the decoder. Among the four modes, in terms of RD (Rate Distortion), a mode in which the minimum RD costs are consumed may be used for inter prediction.

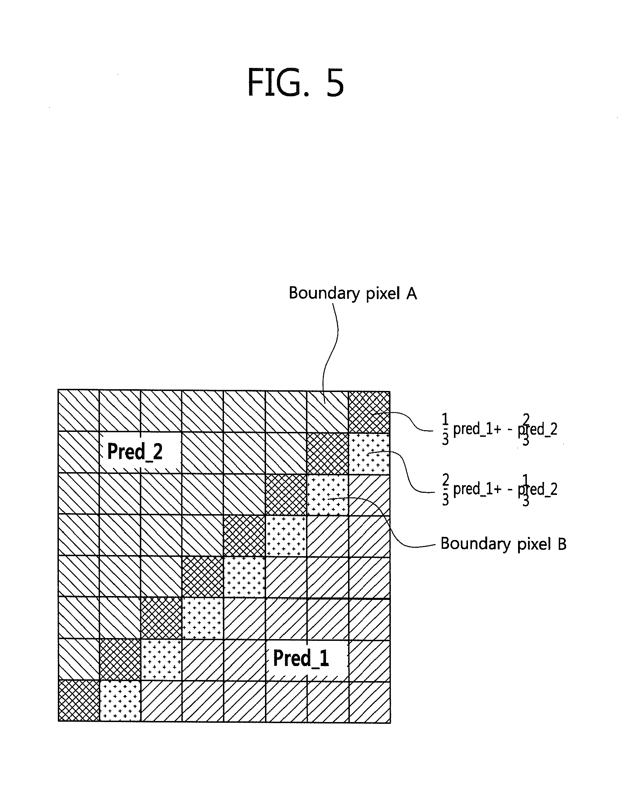

Fig. 5 is a conceptual view illustrating motion compensation on boundary pixels positioned on the boundary line in the case of geometrical partitioning. In case the prediction unit is split in to region 1 and region 2 by geometrical partitioning, the motion vector of region 1 is assumed to be MV1, and the motion vector of region 2 is assumed to be MV2.

When any one of top, bottom, left, and right pixels of specific pixels positioned in region 1 (or region 2) belongs to region 2 (or region 1), it may be deemed a boundary pixel. Referring to Fig. 5, boundary pixel A is a boundary pixel belonging to a boundary with region 2, and boundary pixel B is a boundary pixel belonging to a boundary with region 1. In the case of a non-boundary pixel, normal motion compensation is performed using a proper motion vector. In the case of a boundary pixel, motion compensation is performed using a value obtained by multiplying motion prediction values from the motion vectors MV1 and MV2 of regions 1 and 2 by a weighted factor and adding the values to each other. In the case shown in Fig. 5, a weighted factor of 2/3 is used for a region including the boundary pixel, and a weighted factor of 1/3 is used for the other region that does not include the boundary pixel.

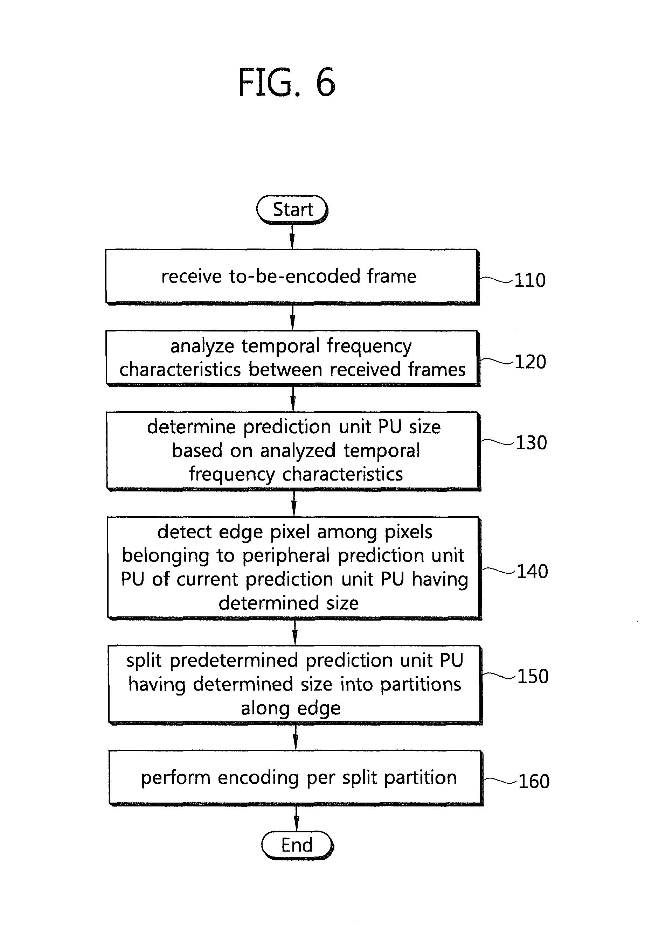

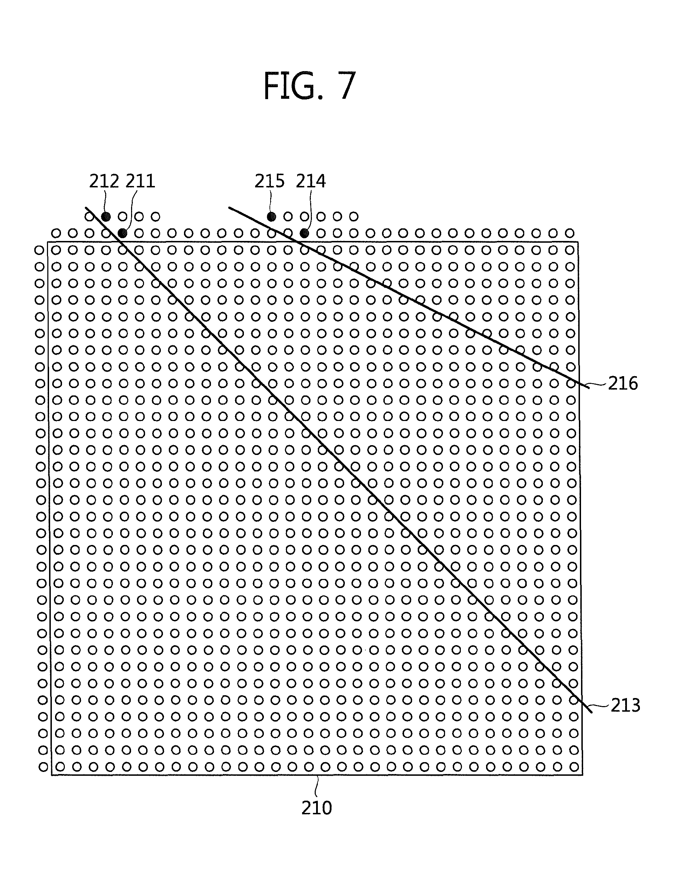

Fig. 6 is a flowchart illustrating an image encoding method according to another example embodiment of the present invention, and Fig. 7 is a conceptual view illustrating the partitioning process shown in Fig. 6.

Fig. 6 illustrates a process of determining the size of a prediction unit PU through the image encoding method shown in Fig. 1, splitting the prediction unit PU into partitions considering an edge included in the prediction unit PU having the determined size, and then performing encoding on each of the split partitions. In Fig. 3, as an example, a macroblock having a size of 32x32 is used as the prediction unit PU.

Here, edge-considered partitioning is applicable to intra prediction as well as inter prediction. The detailed description is given below.

Steps 110 to 130 illustrated in Fig. 6 perform the same functions as the steps denoted with the same reference numerals in Fig. 1, and their description is not repeated.

Referring to Figs. 6 and 7, if the size of the macroblock is determined in steps 110 to 130, the encoding apparatus detects a pixel belonging to an edge among pixels belonging to a macroblock peripheral to the current macroblock having the determined size (step 140).

Various known methods may be used to detect the pixel belonging to the edge in step 140. For example, a residual value between the peripheral pixels peripheral to the current macroblock may be calculated or an edge detection algorithm, such as sobel algorithm, may be used to detect the edge.

Thereafter, the encoding apparatus splits the current macroblock into partitions by using the pixels belonging to the detected edge (step 150).

For partitioning the current macroblock, the encoding apparatus may detect pixels belonging to the edge targeting peripheral pixels of the detected edge pixel among the pixels included in a peripheral block peripheral to the current macroblock and may then performing partitioning by using a line connecting the peripheral pixel of the detected edge pixel with the edge pixel detected in step 140.

For example, as shown in Fig. 7, the encoding apparatus detects pixels 211 and 214 by detecting pixels belonging to the edge targeting the closest pixels among the pixels belonging to the peripheral block of the current macroblock having a size of 32x32 pixels. Thereafter, the encoding apparatus detects the pixel belonging to the edge among the pixels positioned around the detected pixel 211 to thereby detect the pixel 212 and then splits the macroblock into the partitions by using an extension line 213 of the line connecting the pixel 211 with the pixel 212.

Further, the encoding apparatus detects a pixel 215 by detecting a pixel belonging to the edge among the peripheral pixels of a detected pixel 214 and then splits the macroblock into partitions by using an extension line of a line connecting the pixel 214 with the pixel 215.

Still further, the encoding apparatus may detect pixels belonging to the edge targeting the pixels closest to the current macroblock 210 among the pixels belonging to the peripheral block of the current macroblock 210 and then determines the direction of a straight line passing through the pixels belonging to the detected edge, thereby splitting the current macroblock. Here, regarding the direction of the edge straight line passing through the pixels belonging to the edge, along one mode direction of a vertical mode (mode 0), a horizontal mode (mode 1), a diagonal down-left mode (mode 3), a diagonal down-right mode (mode 4), a vertical right mode (mode 5), a horizontal-down mode (mode 6), a vertical left mode (mode 7), and a horizontal-up mode (mode 8) among intra prediction modes of 4x4 blocks according to H.264/AVC standards, the current macroblock may be split, or encoding may be performed on partitions split in different directions from each other with respect to the pixels belonging to the edge and the final direction of the straight may be determined considering encoding efficiency. Alternatively, regarding the direction of the straight line passing through the pixels belonging to the edge, along one mode direction of various intra prediction modes for blocks having a size of 4x4 pixels or more other than the intra prediction modes of 4x4 blocks according to H.264/AVC standards, the current macroblock may be split. Information on the edge straight line passing through the pixels belonging to the edge (including, e.g., direction information) may be included and transmitted to the decoder.

If the current macroblock is split into at least one partition in step 150 by the above-described method, the encoding apparatus performs encoding on each partition (step 160).

For example, the encoding apparatus performs motion prediction on each partition split in the current macroblock having a size of 64x64 or 32x32 pixels to thereby obtain a motion vector, uses the obtained motion vector to perform motion compensation, thereby generating a prediction partition. Then, the encoding apparatus performs transform, quantization, and entropy encoding on a residual value that is a difference between the generated prediction partition and the partition of the current macroblock and then transmits the result. Further, the determined size of the macroblock, partition information, and motion vector information are also entropy-encoded and then transmitted.

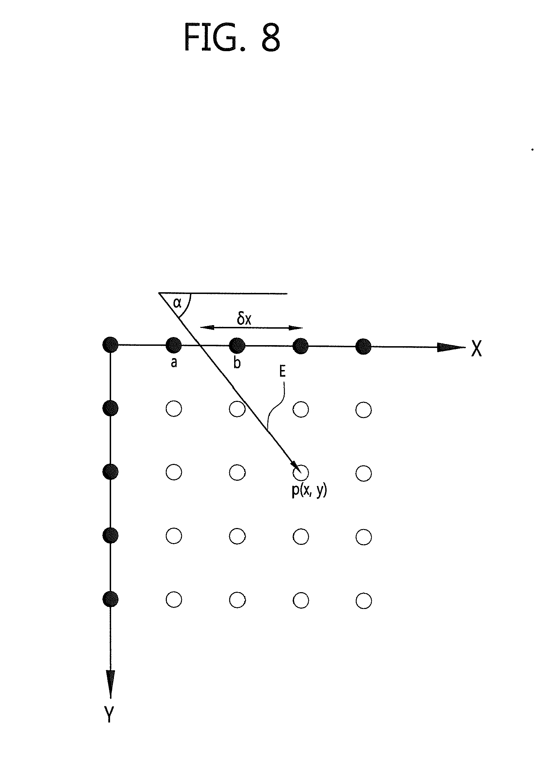

The above-described inter prediction using the edge-considered partitioning may be configured to be able to be performed when the prediction mode using the edge-considered partitioning is activated. The above-described edge-considered partitioning may be applicable to intra prediction as well as inter prediction. The application of the partitioning to intra prediction is described with reference to Fig. 8.

Fig. 8 is a conceptual view illustrating an example where edge-considered partitioning is applied to intra prediction. The inter prediction using the edge-considered partitioning as shown in Fig. 8 may be implemented to be performed in case the prediction mode using the edge-considered partitioning is activated. After an edge is detected by using an edge detection algorithm, such as the above-mentioned sobel algorithm, values of reference pixels may be estimated along the detected edge direction by using an interpolation scheme to be described below.

Referring to Fig. 8, in case line E is an edge boundary line, pixels a and b are pixels positioned at both sides of the boundary line E, and a reference pixel to be subject to inter prediction is p(x,y), p(x,y) may be predicted in the following equations:

[Equation 1]

$$Wa = \delta x - floor(\delta x)$$

$$Wb = ceil(\delta x) - \delta x$$

$$P = WaXa + WbXb$$

Here, $\delta x$ refers to a distance from the x-axis coordinate of the reference pixel p(x,y) to a position where edge line E crosses X axis, Wa and Wb are weighted factors, floor($\delta x$) returns the largest integer not more than $\delta x$ (e.g., floor(1.7)=1), and ceil($\delta x$) returns a rounded value of $\delta x$ (e.g., ceil(1.7)=2).

The information on the edge boundary line passing through the pixels belonging to the edge (including, e.g., direction information) may be included in the partition information or sequence parameter set SPS and transmitted to the decoder.

Alternatively, the values of the reference pixels may be estimated by using an interpolation scheme along the intra prediction direction similar to the detected edge direction among intra prediction directions preset for each block size of the target block of intra prediction (prediction unit). The similar intra prediction direction may be a prediction direction closest to the detected edge direction, and one or two closest prediction directions may be provided. For example, in the case of an 8x8 block, among 34 intra modes, an intra mode having the most similar direction to the predicted edge direction may be used together with the above-mentioned interpolation scheme to estimate the values of the reference pixels. In such case, the information on the intra prediction direction similar to the detected edge direction may be included in the partition information or sequence parameter set SPS and transmitted to the decoder.

Alternatively, the values of the reference pixels may be obtained by performing existing intra prediction using an intra mode similar to he detected edge direction among preset intra prediction directions for each block size of the target block (prediction unit) of intra prediction. The similar intra prediction mode may be a prediction mode most similar to the detected edge direction, and one or two most similar prediction modes may be provided. In such case, information on the intra prediction mode similar to the detected edge direction may be included in partition information or sequence parameter set SPS and transmitted to the decoder.

The above-described edge-considered intra prediction is applicable only when the size of the target block of intra prediction is a predetermined size or more, thus reducing complexity upon intra prediction. The predetermined size may be, e.g., 16x16, 32x32, 64x64, 128x128 or 256x256.

Alternatively, the edge-considered intra prediction may be applicable only when the size of the target block of intra prediction is a predetermined size or less, thus reducing complexity upon intra prediction. The predetermined size may be, e.g., 16x16, 8x8, or 4x4.

Alternatively, the edge-considered intra prediction may be applicable only when the size of the target block of intra prediction belongs to a predetermined size range, thus reducing complexity upon intra prediction. The predetermined size range may be, e.g., 4x4 to 16x16, or 16x16 to 64x64.

The information on the size of the target block to which the edge-considered intra prediction is applicable may be included in the partition information or sequence parameter set SPS and transmitted to the decoder. Alternatively, without being transmitted to the decoder, the information on the size of the target block to which the edge-considered intra prediction is applicable may be previously provided to the encoder and decoder under a prior arrangement between the encoder and the decoder.

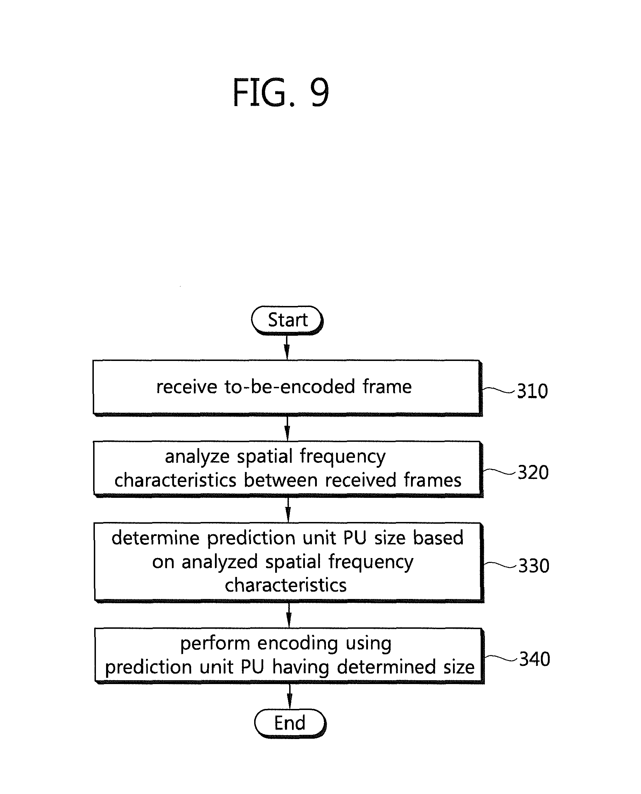

Fig. 9 is a flowchart illustrating an image encoding method according to still another example embodiment of the present invention. Fig. 9 illustrates a method of determining the size of a prediction unit PU according to spatial frequency characteristics of an image and then performing motion compensation encoding by using a prediction unit PU having the determined size.

Referring to Fig. 9, the encoding apparatus first receives a target frame to be encoded (step 310). Here, the received to-be-encoded frame may be stored in a buffer that may store a predetermined number of frames. For example, the buffer may store at least four (n-3, n-2, n-1 and n) frames.

Thereafter, the encoding apparatus analyzes the spatial frequency characteristics of each received frame (or picture) (step 320). For example, the encoding apparatus may yield signal energy of each frame stored in the buffer and may analyze the spatial frequency characteristics of each image by analyzing the relationship between the yielded signal energy and the frequency spectrum.

Then, the encoding apparatus determines the size of the prediction unit PU based on the analyzed spatial frequency characteristics. Here, the size of the prediction unit PU may be determined per frame stored in the buffer or per a predetermined number of frames.

For example, the encoding apparatus determines the size of the prediction unit PU as a size of 16x16 pixels or less when the signal energy of the frame is less than a third threshold preset in the frequency spectrum, as a size of 32x32 pixels when the signal energy is not less than the preset third threshold and less than a fourth threshold, and as a size of 64x64 pixels when the signal energy is not less than the preset fourth threshold. Here, the third threshold represents a situation where the spatial frequency of an image is higher than that of the fourth threshold.

Although it has been described to enhance encoding efficiency by utilizing the size of the macroblock using the extended macroblock for encoding according to the temporal frequency characteristics or spatial frequency characteristics of each received frame (or picture), encoding/decoding may be also performed by using the extended macroblock according to the resolution (size) of each frame (or picture) received independently from the temporal frequency characteristics or spatial frequency characteristics of each received frame (or picture). That is, encoding/decoding may be performed on a frame (or picture) having a resolution higher than HD (High Definition) or ultra HD or more by using the extended macroblock.

If the size of the prediction unit PU is determined in step 330, the encoding apparatus performs encoding on the basis of the prediction unit PU having the predetermined size (step 340).

For example, if the size of the prediction unit PU is determined to be 64x64 pixels, the encoding apparatus performs motion prediction on the current prediction unit PU having a size of 64x64 pixels to thereby obtain a motion vector, performs motion compensation using the obtained motion vector to thereby generate a prediction block, performs transform, quantization, and entropy encoding on a residual value that is a difference between the generated prediction block and the current prediction unit PU, and then transmits the result. Further, information on the determined size of the prediction unit PU and information on the motion vector are also subjected to entropy encoding and then transmitted.

As shown in Fig. 9, in the image encoding method according to an embodiment of the present invention, in case the image homogeneity or uniformity of an input frame (or picture) is high (that is, in case the spatial frequency is lower, for example, a region with the same color, a region where energy is concentrated to a low spatial frequency, etc.), the size of the prediction unit PU is set to be large, e.g., more than 32x32 pixels or more, and in case the image homogeneity or uniformity of a frame (or picture) is low (that is, in case the spatial frequency is high), the size of the prediction unit PU is set to be small, e.g., 16x16 pixels or less, thereby enhancing encoding efficiency.

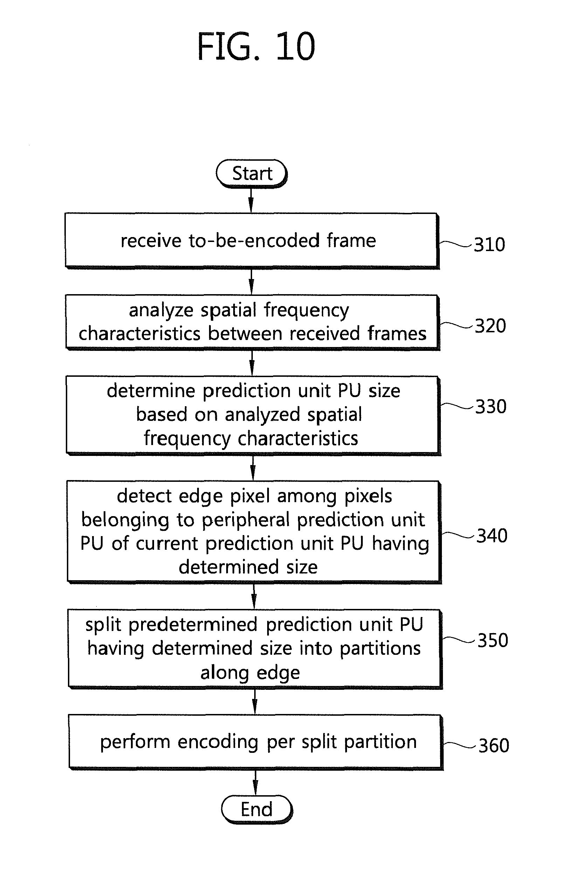

Fig. 10 is a flowchart illustrating an image encoding method according to yet still another example embodiment of the present invention. Fig. 10 illustrates a process in which after the size of the prediction unit PU is determined by the image encoding method illustrated in Fig. 9, the prediction unit PU is split into partitions considering an edge included in the prediction unit PU having the determined size and encoding is then performed on each split partition.

Steps 310 to 330 illustrated in Fig. 10 perform the same functions as steps 310 to 330 of Fig. 9 and thus the detailed description is skipped.

Referring to Fig. 10, if the size of the prediction unit PU is determined in steps 310 to 330 according to the spatial frequency characteristics, the encoding apparatus detects the pixels belonging to the edge among pixels belonging to the prediction unit PU peripheral to the current prediction unit PU having the determined size (step 340).

Various known methods may be performed to detect the pixels belonging to the edge in step 340. For example, the edge may be detected by calculating a residual value between the current prediction unit PU and peripheral peripheral pixels or by using an edge detection algorithm, such as sobel algorithm.

Thereafter, the encoding apparatus splits the current prediction unit PU into partitions by using pixels belonging to the detected edge (step 350).

The encoding apparatus may detect pixels belonging to the detected edge targeting peripheral pixels of the detected edge pixels among pixels included in the peripheral block peripheral to the current prediction unit PU to perform partitioning on the current prediction unit PU as shown in Fig. 3 and may then do partitioning by using a line connecting a peripheral pixel of the detected edge pixel and the edge pixel detected in step 340.

Alternatively, the encoding apparatus may detect pixels belonging to the edge targeting only the pixels closest to the current prediction unit PU among pixels belonging to the peripheral block of the current prediction unit PU and may then perform partitioning on the current prediction unit PU by determining the direction of a straight line passing through pixels belonging to the detected edge.

If the current prediction unit PU is split into at least one partition in step 350 by the above-described method, the encoding apparatus performs encoding on each partition (step 360).

For example, the encoding apparatus obtains a motion vector by performing motion prediction on each split partition in the current prediction unit PU having a size of 64x64 or 32x32 pixels, performs motion compensation using the obtained motion vector to thereby generate a prediction partition, performs transform, quantization, and entropy encoding on a residual value that is a difference between the generated prediction partition and the partition of the current prediction unit PU and then transmits the result. Further, the determined size of the prediction unit PU, partition information and information on the motion vector are also entropy-encoded and then transmitted.

The edge-considered partitioning described in connection with Fig. 5 may be applicable to the intra prediction shown in Fig. 8 as well as inter prediction.

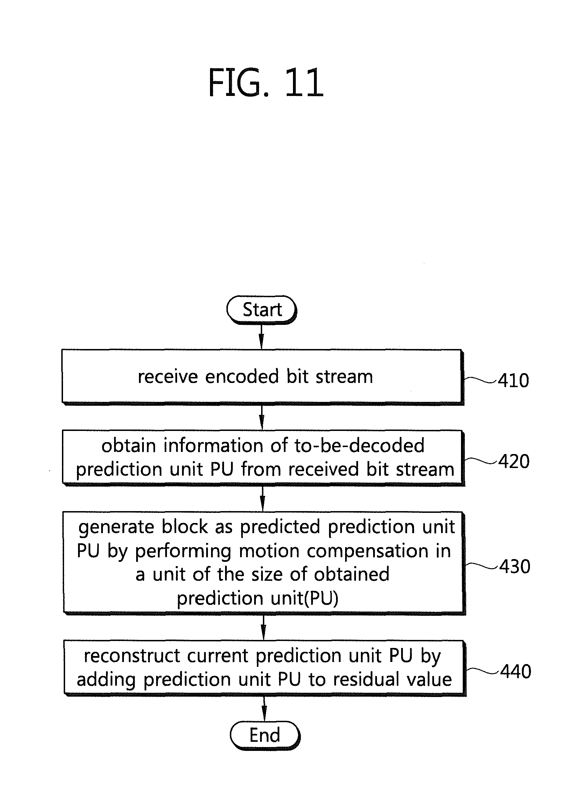

Fig. 11 is a flowchart illustrating an image decoding method according to an embodiment of the present invention.

Referring to Fig. 11, the decoding apparatus first receives a bit stream from the encoding apparatus (step 410).

Thereafter, the decoding apparatus performs entropy decoding on the received bit stream to thereby obtain information of a to-be-decoded current prediction unit PU(step 420). Here, in case, instead of performing encoding and decoding by using the extended macroblock and the size of the extended macroblock, the above-described recursive coding unit (CU) is used to perform encoding and decoding, the prediction unit PU information may include the size of the largest coding unit LCU, the size of the smallest coding unit SCU, the allowable largest hierarchy level or hierarchy depth, and flag information. Further, the decoding apparatus simultaneously obtains a motion vector for motion compensation. Here, the size of the prediction unit PU may have a size determined according to the temporal frequency characteristics or spatial frequency characteristics in the encoding apparatus as shown in Figs. 1 and 9-for example, it may have a size of 32x32 or 64x64 pixels. A decoding controller (not shown) may receive information on the size of the prediction unit PU applicable in the encoding apparatus from the encoding apparatus and may perform motion compensation decoding, inverse transform, or inverse quantization to be described below according to the size of the prediction unit PU applicable in the encoding apparatus.

The decoding apparatus generates a prediction unit PU predicted for motion compensation by using the prediction unit PU size (e.g., 32x32 or 64x64 pixels) information and motion vector information obtained as described above and by using a previously reconstructed frame (or picture) (step 430).

Thereafter, the decoding apparatus reconstructs the current prediction unit PU by adding the generated predicted prediction unit PU to the residual value provided from the encoding apparatus (step 440). Here, the decoding apparatus may obtain the residual value by entropy decoding the bit stream provided from the encoding apparatus and then performing inverse quantization and inverse transform on the result, thereby obtaining the residual value. Further, the inverse transform process may be also performed on the basis of the prediction unit PU size (e.g., 32x32 or 64x64 pixels) obtained in step 420.

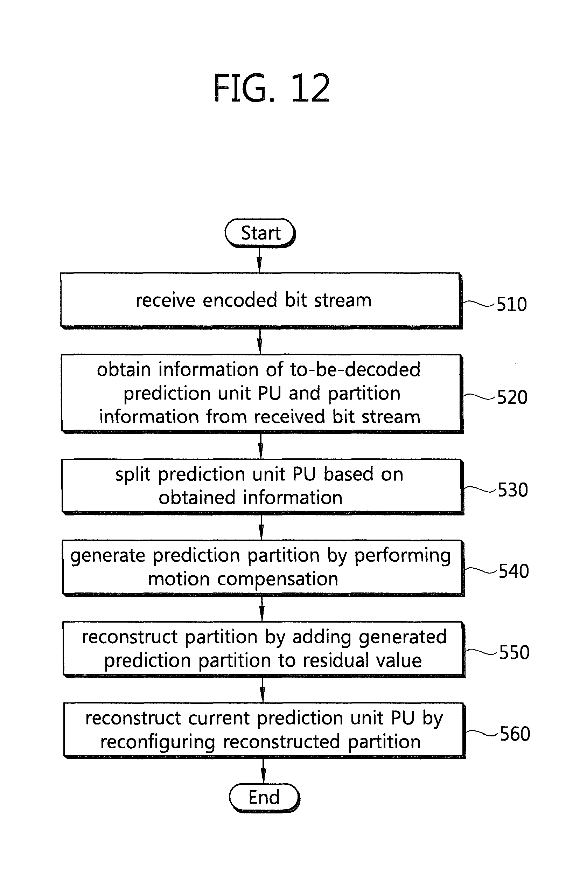

Fig. 12 is a flowchart illustrating an image decoding method according to another example embodiment of the present invention, and Fig. 12 illustrates a process of decoding an encoded image per partition by splitting, along the edge, a macroblock having the size determined depending on the temporal frequency characteristics or spatial frequency characteristics in the image encoding apparatus.

Referring to Fig. 12, the decoding apparatus receives a bit stream from the encoding apparatus (step 510).

Thereafter, the decoding apparatus obtains partition the information of the to-be-decoded current prediction unit PU and partition information of the current prediction unit PU by performing entropy decoding on the received bit stream (step 520). Here, the size of the current prediction unit PU may be, e.g., 32x32 or 64x64 pixels. Further, the decoding apparatus simultaneously obtains a motion vector for motion compensation. Here, in case, instead of performing encoding and decoding by using an extended macroblock and the size of the extended macroblock, the above-described recursive coding unit (CU) is used to perform encoding and decoding, the prediction unit PU information may include the size of the largest coding unit LCU, the size of the smallest coding unit SCU, the allowable largest hierarchy level or hierarchy depth, and flag information. The partition information may include partition information transmitted to the decoder in the case of asymmetric partitioning, geometrical partitioning, and along-edge-direction partitioning.

Next, the decoding apparatus splits the prediction unit PU by using the obtained prediction unit PU information and partition information (step 530).

Further, the decoding apparatus generates a prediction partition by using the partition information, motion vector information, and previously reconstructed frame (or picture) (step 540), and reconstructs the current partition by adding the generated prediction partition to the residual value provided from the encoding apparatus (step 550). Here, the decoding apparatus may obtain the residual value by performing entropy decoding, inverse quantization, and inverse transform on the bit stream provided from the encoding apparatus.

Thereafter, the decoding apparatus reconstructs the current macroblock by reconstructing all the partitions included in the current block based on the obtained partition information and then reconfiguring the reconstructed partitions (step 560).

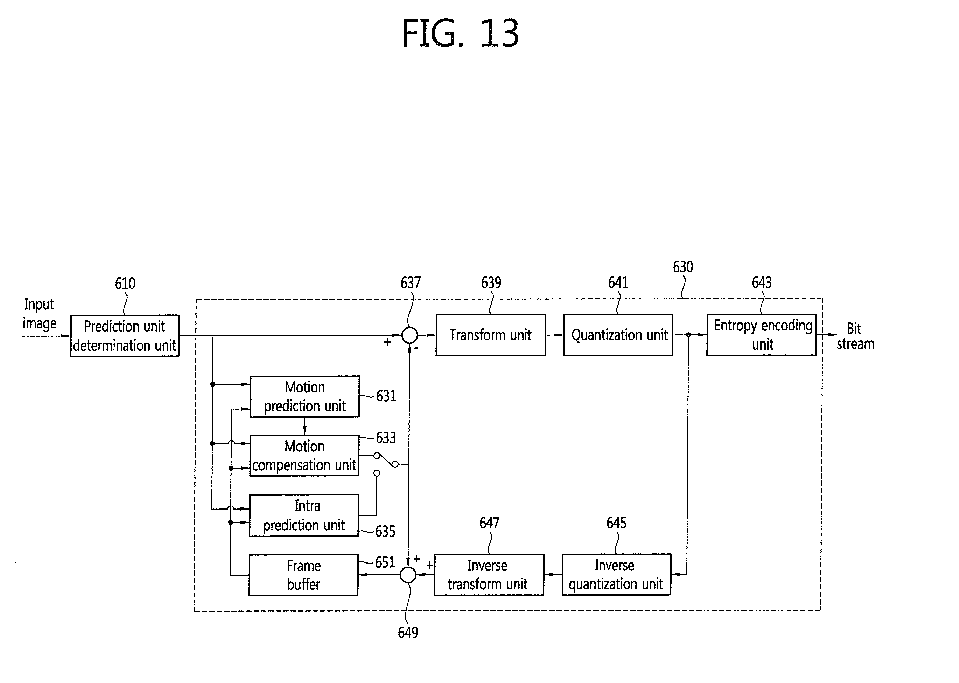

Fig. 13 is a block diagram illustrating a configuration of an image encoding apparatus according to an embodiment of the present invention.

Referring to Fig. 13, the image encoding apparatus may include a prediction unit determination unit 610, and an encoder 630. The encoder 630 may include a motion prediction unit 631, a motion compensation unit 633, an intra prediction unit 635, a subtractor 637, a transform unit 639, a quantization unit 641, an entropy encoding unit 643, an inverse quantization unit 645, an inverse transform unit 647, an adder 649, and a frame buffer 651. Here, the prediction unit determination unit 610 may be performed in an encoding controller (not shown) that determines the size of a prediction unit applicable to inter prediction or intra prediction or may be performed in a separate block outside the encoder as shown in the drawings. Hereinafter, an example where the prediction unit determination unit 610 is performed in a separate block outside the encoder is described.

The prediction unit determination unit 610 receives a provided input image and stores it in an internal buffer (not shown), and then analyzes temporal frequency characteristics of the stored frame. Here, the buffer may store a predetermined number of frames. For example, the buffer may store at least four (n-3th, n-2th, n-1th and nth) frames.

The prediction unit determination unit 610 detects a variation between the n-3th frame and the n-2th frame stored in the buffer, detects a variation between the n-2th frame and the n-1th frame, and detects a variation between the n-1th frame and the nth frame to thereby inter-frame temporal frequency characteristics, compares the analyzed temporal frequency characteristics with a predetermined threshold, and determines the size of the to-be-encoded prediction unit based on the result of the comparison.

Here, the prediction unit determination unit 610 may determine the size of the prediction unit based on the variation of two temporarily peripheral frames (for example, n-1th and nth frames) among the frames stored in the buffer and may determine the size of the prediction unit based on variation characteristics of a predetermined number of frames (for example, n-3th, n-2th, n-1th, and nth frames) so as to reduce overhead for the size information of the prediction unit.

For example, the prediction unit determination unit 610 may analyze the temporal frequency characteristics of the n-1th frame and the nth frame and may determine the size of the prediction unit as 64x64 pixels when the analyzed temporal frequency characteristic value is less than a predetermined first threshold, as 32x32 pixels when the analyzed temporal frequency characteristic value is not less than the predetermined first threshold and less than a second threshold, and as 16x16 pixels or less when the analyzed temporal frequency characteristic value is not less than the predetermined second threshold. Here, the first threshold may represent a temporal frequency characteristic value when an inter-frame variation is smaller than the second threshold.

As described above, the prediction unit determination unit 610 provides prediction unit information determined for inter prediction or intra prediction to the entropy encoding unit 643 and provides each prediction unit having the determined size to the encoder 630. Here, the prediction unit information may include information on the determined size of the prediction unit for inter prediction or intra prediction or prediction unit type information. PU size information or PU(prediction unit) type information may be transmitted to decoder through signaling information such as Sequence parameter set (SPS) or Picture parameter set or slice segment header or any other header information. Specifically, in case encoding and decoding are performed using an extended macroblock or the size of the extended macroblock, the prediction block information may include PU size information or PU(prediction unit) type information or macroblock size information or extended macroblock size index information. In case the above-described recursive coding unit CU is performed to perform encoding and decoding, the prediction unit information may include the size information of a leaf coding unit LCU to be used for inter prediction or intra prediction instead of the macroblock, that is, size information of the prediction unit, and the prediction unit information may further include the size of the largest coding unit LCU, the size of the smallest coding unit SCU, the allowable largest hierarchy level or hierarchy depth and flag information.

The prediction unit determination unit 610 may determine the size of the prediction unit by analyzing the temporal frequency characteristics of the provided input frame as described above, and may also determine the size of the prediction unit by analyzing the spatial frequency characteristics of the provided input frame. For example, in case the image homogeneity or uniformity of the input frame is high, the size of the prediction unit is set to be large, e.g., 32x32 pixels or more, and in case the image homogeneity or uniformity of the frame is lower (that is, in case the spatial frequency is high), the size of the prediction unit may be set to be low, e.g., 16x16 pixels or less.

The encoder 630 performs encoding on the prediction unit having the size determined by the prediction unit determination unit 610.

Specifically, the motion prediction unit 631 predicts motion by comparing the provided current prediction unit with a previous reference frame whose encoding has been done and which is stored in the frame buffer 651, thereby generating a motion vector.

The motion compensation unit 633 generates a prediction unit predicted by using the reference frame and the motion vector provided from the motion prediction unit 631.

The intra prediction unit 635 performs inter-frame prediction encoding by using an inter-block pixel correlation. The intra prediction unit 635 performs intra prediction that obtains a prediction block of the current prediction unit by predicting a pixel value from an already encoded pixel value of a block in the current frame (or picture). The intra prediction unit 635 performs the above-described along-edge-direction inter prediction on the prediction unit having a size corresponding to the obtained prediction unit size information.

The subtractor 637 subtracts the predicted prediction unit provided from the motion compensation unit 633 and the current prediction unit to thereby generate a residual value, and the transform unit 639 and the quantization unit 641 perform DCT (Discrete Cosine Transform) and quantization on the residual value. Here, the transform unit 639 may perform transform based on the prediction unit size information provided from the prediction unit determination unit 610. For example, it may perform transform to a size of 32x32 or 64x64 pixels. Alternatively, the transform unit 639 may perform transform on the basis of a separate transform unit (TU) independently from the prediction unit size information provided from the prediction unit determination unit 610. For example, the size of the transform unit TU may be the minimum of 4x4 pixels to the maximum of 64x64. Alternatively, the maximum size of the transform unit TU may be 64x64 pixels or more-for example, 128x128 pixels. The transform unit size information may be included in the transform unit information and transmitted to the decoder.

The entropy encoding unit 643 entropy-encodes header information, such as the quantized DCT coefficients, motion vector, determined prediction unit information, partition information, and transform unit information, thereby generating a bit stream.

The inverse quantization unit 645 and the inverse transform unit 647 perform inverse quantization and inverse transform on the data quantized by the quantization unit 641. The adder 649 adds the inverse transformed data to the predicted prediction unit provided from the motion compensation unit 633 to reconstruct the image, and provides the image to the frame buffer 651, and the frame buffer 651 stores the reconstructed image.

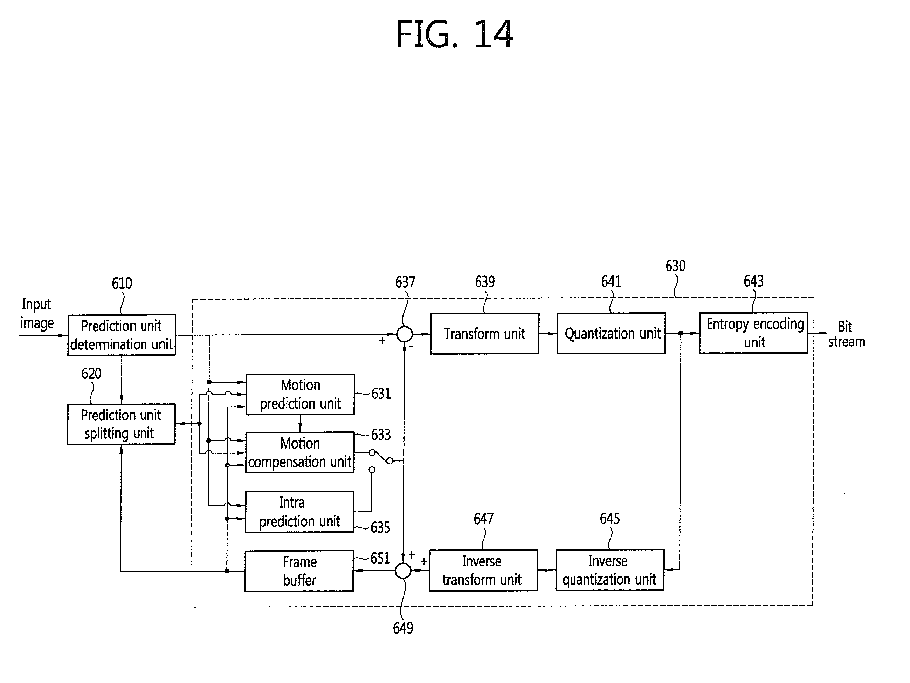

Fig. 14 is a block diagram illustrating a configuration of an image encoding apparatus according to another example embodiment of the present invention.

Referring to Fig. 14, the image encoding apparatus according to the embodiment of the present invention may include a prediction unit determination unit 610, a prediction unit splitting unit 620 and an encoder 630. The encoder 630 may include a motion prediction unit 631, a motion compensation unit 633, an intra prediction unit 635, a subtractor 637, a transform unit 639, a quantization unit 641, an entropy encoding unit 643, an inverse quantization unit 645, an inverse transform unit 647, an adder 649, and a frame buffer 651. Here, the prediction unit determination unit or prediction unit splitting unit used for an encoding process may be performed in an encoding controller (not shown) that determines the size of the prediction unit applicable to inter prediction and intra prediction or may be performed in a separate block outside the encoder as shown in the drawings. Hereinafter, an example where the prediction unit determination unit or the prediction unit splitting unit is performed in a separate block outside the encoder is described.

The prediction unit determination unit 610 performs the same functions as the element denoted with the same reference numeral as shown in Fig. 13, and the detailed description is skipped.

The prediction unit splitting unit 620 splits the current prediction unit into partitions considering an edge included in a peripheral block of the current prediction unit for the current prediction unit provided from the prediction unit determination unit 610 and then provides the split partitions and partition information to the encoder 630. Here, the partition information may include partition information in the case of asymmetric partitioning, geometrical partitioning, and along-edge-direction partitioning.

Specifically, the prediction unit splitting unit 620 reads a prediction unit peripheral to the current prediction unit provided from the prediction unit determination unit 610 out of the frame buffer 651, detects pixels belonging to an edge among pixels belonging to the prediction unit peripheral to the current prediction unit, and splits the current prediction unit into the partitions by using pixels belonging to the detected edge.

The prediction unit splitting unit 620 may detect the edge by calculating a residual value between the current prediction unit and the peripheral peripheral pixel or by using a known edge detection algorithm, such as sobel algorithm.

As shown in Fig. 3, the prediction unit splitting unit 620 may detect pixels belonging to the detected edge targeting peripheral pixels of the detected edge pixel among the pixels included in the peripheral block peripheral to the current prediction unit for splitting the current prediction unit and may performing partitioning by using a line connecting the peripheral pixel of the detected edge pixel to the detected edge pixel.

Alternatively, the prediction unit splitting unit 620 may detect pixels belonging to the edge targeting only the pixels closest to the current prediction unit among the pixels belonging to the peripheral block of the current prediction unit and then may determine the direction of a straight line passing through the pixels belonging to the detected edge, thereby splitting the current prediction unit. Here, as the direction of the straight line passing through the pixels belonging to the edge, any one of inter prediction modes of 4x4 blocks according to H.264 standards may be used.

The prediction unit splitting unit 620 splits the current prediction unit into at least one partition and then provides the split partition to the motion prediction unit 631 of the encoder 630. Further, the prediction unit splitting unit 620 provides partition information of the prediction unit to the entropy encoding unit 643.

The encoder 630 performs encoding on the partition provided from the prediction unit splitting unit 620.

Specifically, the motion prediction unit 631 predicts motion by comparing the provided current partition with a previous reference frame whose encoding has been complete and which is stored in the frame buffer 651 to prediction a motion, thereby generating a motion vector, and the motion compensation unit 633 generates a prediction partition by using the reference frame and the motion vector provided from the motion prediction unit 631.

The intra prediction unit 635 performs intra-frame prediction encoding by using an inter-block pixel correlation. The intra prediction unit 635 performs intra prediction that yields a prediction block of the current prediction unit by predicting a pixel value from an already encoded pixel value of a block in the current frame.

The intra prediction unit 635 performs the above-described along-edge-direction intra prediction on the prediction unit having a size corresponding to the obtained prediction unit size information.

The subtractor 637 subtracts the current partition and the prediction partition provided from the motion compensation unit 633 to generate a residual value, and the transform unit 639 and the quantization unit 641 perform DCT (Discrete Cosine Transform) and quantization on the residual value. The entropy encoding unit 643 entropy-encodes header information, such as the quantized DCT coefficients, motion vector, determined prediction unit information, prediction unit partition information, or transform unit information.

The inverse quantization unit 645 and the inverse transform unit 647 inverse quantizes and inverse transforms data quantized through the quantization unit 641. The adder 649 adds the inverse transformed data to the prediction partition provided from the motion compensation unit 633 to reconstruct an image and provides the reconstructed image to the frame buffer 651. The frame buffer 651 stores the reconstructed image.

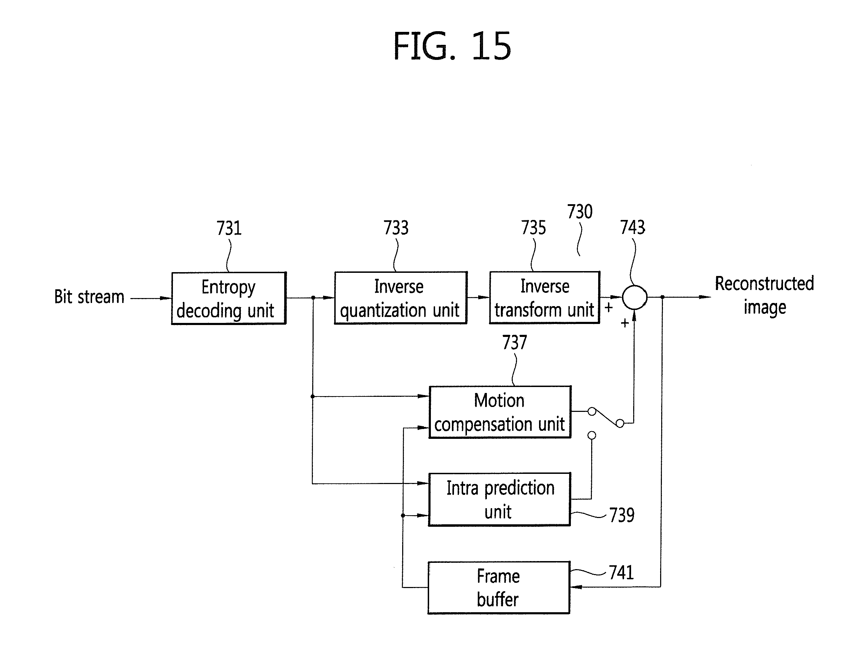

Fig. 15 is a block diagram illustrating a configuration of an image decoding apparatus according to an embodiment of the present invention.

Referring to Fig. 15, the decoding apparatus according to an embodiment of the present invention includes an entropy decoding unit 731, an inverse quantization unit 733, an inverse transform unit 735, a motion compensation unit 737, an intra prediction unit 739, a frame buffer 741, and an adder 743.

The entropy decoding unit 731 receives a compressed bit stream and performs entropy encoding on it thereby generating a quantized coefficient. The inverse quantization unit 733 and the inverse transform unit 735 perform inverse quantization and inverse transform on the quantized coefficient to thereby reconstruct a residual value.

The motion compensation unit 737 generates a predicted prediction unit by performing motion compensation on the prediction unit having the same size as the size of the prediction unit PU encoded using the decoded header information from the bit stream by the entropy decoding unit 731. Here, the decoded header information may include prediction unit size information, and the prediction unit size may be, e.g., an extended macroblock size, such as 32x32, 64x64, or 128x128 pixels.

That is, the motion compensation unit 737 may generate a predicted prediction unit by performing motion compensation on the prediction unit having the decoded prediction unit size.

The intra prediction unit 739 performs intra-frame prediction encoding by using an inter-block pixel correlation. The intra prediction unit 739 performs intra prediction that obtains a prediction block of the current prediction unit by predicting a pixel value from an already encoded pixel value of a block in the current frame (or picture). The intra prediction unit 739 performs the above-described along-edge-direction intra prediction on the prediction unit having a size corresponding to the obtained prediction unit size information.

The adder 743 adds the residual value provided from the inverse transform unit 735 to the predicted prediction unit provided from the motion compensation unit 737 to reconstruct an image and provides the reconstructed image to the frame buffer 741 that then stores the reconstructed image.

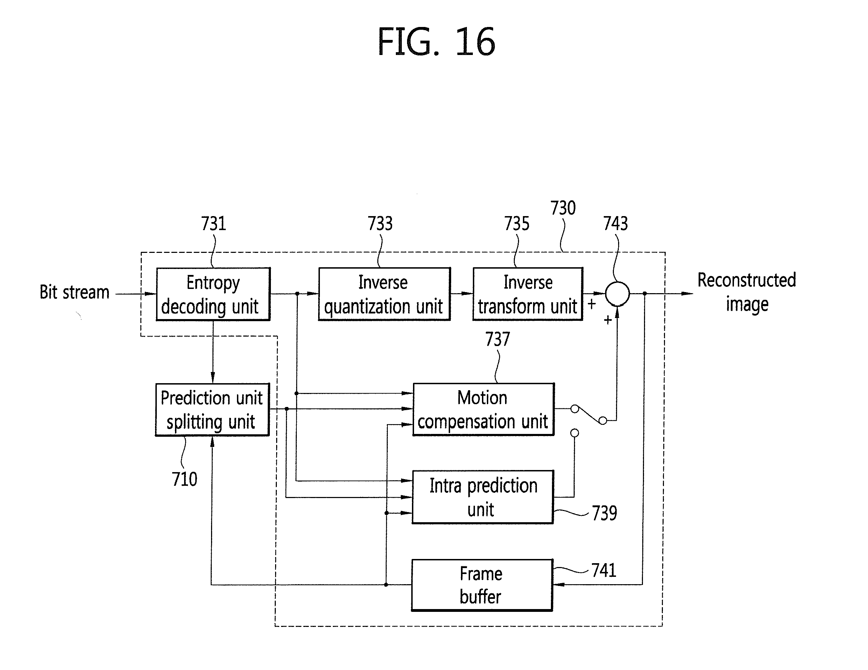

Fig. 16 is a block diagram illustrating a configuration of an image decoding apparatus according to another example embodiment of the present invention.

Referring to Fig. 16, the decoding apparatus according to the embodiment of the present invention may include a prediction unit splitting unit 710 and a decoder 730. The decoder 730 includes an entropy decoding unit 731, an inverse quantization unit 733, an inverse transform unit 735, a motion compensation unit 737, an intra prediction unit 739, a frame buffer 741, and an adder 743.

The prediction unit splitting unit 710 obtains header information in which a bit stream has been decoded by the entropy decoding unit 731 and extracts prediction unit information and partition information from the obtained header information. Here, the partition information may be information on a line splitting the prediction unit. For example, the partition information may include partition information in the case of asymmetric partitioning, geometrical partitioning, and along-edge-direction partitioning.

Thereafter, the prediction unit splitting unit 710 splits the prediction unit of the reference frame stored in the frame buffer 741 into partitions by using the extracted partition information and provides the split partitions to the motion compensation unit 737.

Here, the prediction unit splitting unit used for the decoding process may be performed in a decoding controller (not shown) that determines the size of the prediction unit applicable to the inter prediction or intra prediction or may be also performed in a separate block outside the decoder as shown in the drawings. Hereinafter, an example where the prediction unit splitting unit is performed in a separate block outside the decoder is described.

The motion compensation unit 737 performs motion compensation on the partition provided from the prediction unit splitting unit 710 by using motion vector information included in the decoded header information, thereby generating a prediction partition.

The inverse quantization unit 733 and the inverse transform unit 735 inverse quantizes and inverse transforms the coefficient entropy decoded in the entropy decoding unit 731 to thereby generate a residual value, and the adder 743 adds the prediction partition provided from the motion compensation unit 737 to the residual value to reconstruct an image, and the reconstructed image is stored in the frame buffer 741.

In Fig. 16, the size of the decoded macroblock may be, e.g., 32x32, 64x64, or 128x128 pixels, and the prediction unit splitting unit 710 may split the macroblock having a size of 32x32, 64x64 or 128x128 pixels based on the partition information extracted from the header information.

Although the present invention has been described in conjunction with the embodiments, it may be understood by those skilled in the art that various modifications or variations may be made to the present invention without departing from the scope and spirit of the present invention defined in the appending claims. The invention further relates to the following numbered items:

[Item 1]

An image encoding method comprising the steps of:

  generating a prediction block by performing motion compensation on a prediction unit having a size of NxN pixels, wherein N is a power of 2;
  obtaining a residual value by comparing the prediction unit with the prediction block; and

performing transform on the residual value.

[Item 2]

The image encoding method of item 1, wherein the prediction unit corresponds to a leaf coding unit when a coding unit having a variable size is hierarchically split and reaches an allowable largest hierarchy level or hierarchy depth, and wherein the image encoding method further comprises the step of transmitting a sequence parameter set (SPS) including a size of a largest coding unit and a size of a smallest coding unit.

[Item 3]

The image encoding method of item 2, wherein the step of performing transform on the residual value is the step of performing DCT (Discrete Cosine Transform) on an extended macroblock.

[Item 4]

The image encoding method of item 1, wherein N is a power of 2 and N is not less than 8 and not more than 64.

[Item 5]

An image encoding method comprising the steps of:

  receiving at least one picture to be encoded;
  determining a size of a to-be-encoded block based on a temporal frequency characteristics between the received at least one picture; and
  encoding a block having the determined size.

[Item 6]

An image encoding method comprising the steps of:

  receiving at least one picture to be encoded;
  determining a size of a to-be-encoded prediction unit based on a spatial frequency characteristics of the received at least one picture, wherein the size of the prediction unit is NxN pixels and N is a power of 2; and
  encoding a prediction unit having the determined size.

[Item 7]

An image decoding method comprising the steps of:

  receiving an encoded bit stream;
  obtaining size information of a to-be-decoded prediction unit from the received bit stream, wherein, a size of the prediction unit is NxN pixels and N is a power of 2;

obtaining a residual value by performing inverse quantization and inverse transform on the received bit stream;

generating a prediction block by performing motion compensation on a prediction unit having a size corresponding to the obtained size information; and

reconstructing an image by adding the generated prediction block to the residual value.

[Item 8]

The image decoding method of item 7, wherein the size information of the prediction unit includes a size of a largest coding unit and a size of a smallest coding unit.

[Item 9]

The image decoding method of item 8, wherein the step of transforming the residual value is the step of performing inverse DCT (Discrete Cosine Transform) on the extended macroblock.

[Item 10]

The image decoding method of item 7, wherein N is a power of 2 and N is not less than 8 and not more than 64.

[Item 11]

The image decoding method of item 7, wherein the prediction unit corresponds to a leaf coding unit when a coding unit having a variable size is hierarchically split and reaches an allowable largest hierarchy level or hierarchy depth.

[Item 12]

The image decoding method of item 7, further comprising the step of obtaining partition information of a to-be-decoded prediction unit from the received bit stream.

[Item 13]

The image decoding method of item 12, wherein the step of generating the prediction block by performing motion compensation on the prediction unit having the size corresponding to the obtained size information includes the step of performing partitioning on the prediction unit based on the partition information of the prediction unit and performing the motion compensation on a split partition.

[Item 14]

The image decoding method of item 13, wherein the partitioning is performed in an asymmetric partitioning scheme.

[Item 15]

The image decoding method of item 13, wherein the partitioning is performed in a geometrical partitioning scheme having a shape other than square.

[Item 16]

The image decoding method of item 13, wherein the partitioning is performed along edge direction, wherein the partitioning along the edge direction includes the steps of:

detecting a pixel belonging to an edge among blocks peripheral to the prediction unit; and
splitting the prediction unit into at least one partition based on a pixel belonging to the detected edge.

[Item 17]

The image decoding method of item 7, further comprising the step of performing intra prediction along an edge direction on a prediction unit having a size corresponding to the obtained size information of the prediction unit.

[Item 18]

The image decoding method of item 17, wherein an information about the edge direction is included in one of partition information and a sequence parameter set (SPS) and transmitted to a decoder.

[Item 19]

An image encoding apparatus comprising:

a prediction unit determination unit that receives at least one picture to be encoded and determines a size of a to-be-encoded prediction unit based on a temporal frequency characteristics between the received at least one picture or based on a spatial frequency characteristics between the received at least one picture; and
an encoder that encodes a prediction unit having the determined size.

[Item 20]

An image decoding apparatus comprising:

an entropy decoder that decodes a received bit stream to generate header information;

a motion compensation unit that generates a prediction block by performing motion compensation on the prediction unit based on size information of the prediction unit obtained from the header information, wherein the size of the prediction unit is NxN pixels and N is a power of 2;

an inverse quantization unit that inverse quantizes the received bit stream;

an inverse transform unit that obtains a residual value by performing inverse transforming on inverse quantized data; and

an adder that adds the residual value to the prediction block to reconstruct an image.

[Item 21]

The image decoding apparatus of item 20, wherein the size information of the prediction unit includes a size of a largest coding unit and a size of a smallest coding unit.

[Item 22]

The image decoding apparatus of item 21, wherein the inverse transform unit performs inverse DCT (Discrete Cosine Transform) on an extended macroblock.

[Item 23]

The image decoding apparatus of item 20, wherein the prediction unit has a size of NxN pixels, wherein N is a power of 2, and N is not less than 4 and not more than 64).

[Item 24]

The image decoding apparatus of item 24, wherein the prediction unit corresponds to a leaf coding unit when a coding unit having a variable size is hierarchically split and reaches an allowable largest hierarchy level or hierarchy depth.

[Item 25]

The image decoding apparatus of item 20, wherein the motion compensation unit performs the motion compensation on the split partition by performing partitioning on the prediction unit based on the partition information of the prediction unit.

[Item 26]

The image decoding apparatus of item 25, wherein the partitioning is performed in an asymmetric partitioning scheme.

[Item 27]

The image decoding apparatus of item 25, wherein the partitioning is performed in a geometrical partitioning scheme having a shape other than square.

[Item 28]

The image decoding apparatus of item 25, wherein the partitioning is performed along edge direction.

[Item 29]

The image decoding apparatus of item 28, further comprising an intra prediction unit that performs intra prediction along the edge direction on a prediction unit having a size corresponding to the obtained size information of the prediction unit.

**Claims**

1. An image decoding apparatus comprising:

   an entropy decoder that decodes a received bit stream to generate header information;
   a motion compensation unit that generates a prediction block by performing motion compensation on the prediction unit based on information of the prediction unit obtained from the header information, wherein the prediction unit has variable size;
   an inverse quantization unit that inverse quantizes the received bit stream;
   an inverse transform unit that obtains a residual value by performing inverse transforming on inverse quantized data; and
   an adder that adds the residual value to the prediction block to reconstruct an image,
   wherein the prediction unit corresponds to a leaf coding unit when a coding unit is split and reaches an allowable largest hierarchy depth, and the coding unit has a recursive tree structure, and
   wherein a partition splitting is achieved by an asymmetric partitioning when the prediction unit is split.

2. The image decoding apparatus of claim 1, wherein the size of the smallest coding unit SCU is included in a sequence parameter set (SPS).

3. The image decoding apparatus of claim 1, wherein the asymmetric partitioning is conducted along a horizontal direction to split the prediction unit
   into a first partition having a size of 64x16 and a second partition having a size of 64x48, or
   into a first partition having a size of 64x48 and a second partition having a size of 64x16.

4.　The image decoding apparatus of claim 1, wherein the asymmetric partitioning is performed along a vertical direction to split the prediction unit into a first partition having a size of 16x64 and a second partition having 48x64, or into a first partition having a size of 48x64 and a second partition having a size of 16x64.

5.　The image decoding apparatus of claim 1, when a planar intra prediction mode is activated, a predicted pixel value of an internal pixel of a current prediction unit is obtained by performing bilinear interpolation using (i) vertically and horizontally directional corresponding internal boundary prediction pixel values in the current prediction unit, and (ii) vertically and horizontally directional corresponding pixel values in previously decoded left side block and upper end block of the current prediction unit.

6.　The image decoding apparatus of claim 5, wherein the vertically and horizontally directional corresponding pixel values in the previously decoded left side block and upper end block of the current prediction unit include:

　　　a pixel value of a third pixel which is located on a lowermost boundary of the upper end block of the current prediction unit and on the same vertical column as the internal pixel, and a pixel value of a fourth pixel which is located on a rightmost boundary of the left side block of the current prediction unit and on the same horizontal row as the internal pixel.

7.　The image decoding apparatus of claim 1, wherein a size of the prediction unit is restricted to no more than 64x64 pixels.

# FIG. 1

```
                    ( Start )
                        │
                        ▼
    ┌───────────────────────────────────────┐
    │       receive to-be-encoded frame      │──110
    └───────────────────────────────────────┘
                        │
                        ▼
    ┌───────────────────────────────────────┐
    │          analyze temporal frequency    │──120
    │   characteristics between received frames│
    └───────────────────────────────────────┘
                        │
                        ▼
    ┌───────────────────────────────────────┐
    │   determine macroblock size based on   │──130
    │       analyzed temporal frequency      │
    │             characteristics            │
    └───────────────────────────────────────┘
                        │
                        ▼
    ┌───────────────────────────────────────┐
    │          perform encoding using        │──140
    │   macroblock having determined size    │
    └───────────────────────────────────────┘
                        │
                        ▼
                    ( End )
```

# FIG. 2

# FIG. 3

# FIG. 4A

# FIG. 4B

# FIG. 4C

# FIG. 5

Boundary pixel A

$\frac{1}{3}$ pred_1+ - $\frac{2}{3}$ pred_2

$\frac{2}{3}$ pred_1+ - $\frac{1}{3}$ pred_2

Boundary pixel B

Pred_2

Pred_1

# FIG. 6

Start

receive to-be-encoded frame ～110

analyze temporal frequency
characteristics between received frames ～120

determine prediction unit PU size
based on analyzed temporal
frequency characteristics ～130

detect edge pixel among pixels
belonging to peripheral prediction unit
PU of current prediction unit PU having
determined size ～140

split predetermined prediction unit PU
having determined size into partitions
along edge ～150

perform encoding per split partition ～160

End

# FIG. 7

# FIG. 8

# FIG. 9

```
                    ( Start )
                        │
                        ▼
   ┌──────────────────────────────────────┐
   │       receive to-be-encoded frame     │──── 310
   └──────────────────────────────────────┘
                        │
                        ▼
   ┌──────────────────────────────────────┐
   │         analyze spatial frequency      │
   │   characteristics between received frames │──── 320
   └──────────────────────────────────────┘
                        │
                        ▼
   ┌──────────────────────────────────────┐
   │  determine prediction unit PU size based │
   │       on analyzed spatial frequency    │──── 330
   │              characteristics            │
   └──────────────────────────────────────┘
                        │
                        ▼
   ┌──────────────────────────────────────┐
   │           perform encoding using       │
   │ prediction unit PU having determined size │──── 340
   └──────────────────────────────────────┘
                        │
                        ▼
                    ( End )
```

# FIG. 10

```
            ( Start )
               │
               ▼
┌──────────────────────────────────┐
│    receive to-be-encoded frame    │──310
└──────────────────────────────────┘
               │
               ▼
┌──────────────────────────────────┐
│     analyze spatial frequency     │
│ characteristics between received frames │──320
└──────────────────────────────────┘
               │
               ▼
┌──────────────────────────────────┐
│   determine prediction unit PU size │
│      based on analyzed spatial     │──330
│      frequency characteristics     │
└──────────────────────────────────┘
               │
               ▼
┌──────────────────────────────────┐
│    detect edge pixel among pixels  │
│ belonging to peripheral prediction unit │
│ PU of current prediction unit PU having │──340
│         determined size           │
└──────────────────────────────────┘
               │
               ▼
┌──────────────────────────────────┐
│  split predetermined prediction unit PU │
│  having determined size into partitions │──350
│            along edge             │
└──────────────────────────────────┘
               │
               ▼
┌──────────────────────────────────┐
│   perform encoding per split partition │──360
└──────────────────────────────────┘
               │
               ▼
            ( End )
```

# FIG. 11

```
                    ( Start )
                        │
                        ▼
   ┌─────────────────────────────────────────┐
   │       receive encoded bit stream         │──410
   └─────────────────────────────────────────┘
                        │
                        ▼
   ┌─────────────────────────────────────────┐
   │      obtain information of to-be-decoded  │──420
   │   prediction unit PU from received bit stream │
   └─────────────────────────────────────────┘
                        │
                        ▼
   ┌─────────────────────────────────────────┐
   │  generate block as predicted prediction unit │
   │  PU by performing motion compensation in  │──430
   │        a unit of the size of obtained      │
   │           prediction unit(PU)              │
   └─────────────────────────────────────────┘
                        │
                        ▼
   ┌─────────────────────────────────────────┐
   │  reconstruct current prediction unit PU by │──440
   │  adding prediction unit PU to residual value │
   └─────────────────────────────────────────┘
                        │
                        ▼
                    ( End )
```

# FIG. 12

```
                    ( Start )
                        │
                        ▼
┌──────────────────────────────────────────┐
│       receive encoded bit stream          │───510
└──────────────────────────────────────────┘
                        │
                        ▼
┌──────────────────────────────────────────┐
│   obtain information of to-be-decoded      │
│      prediction unit PU and partition      │───520
│    information from received bit stream     │
└──────────────────────────────────────────┘
                        │
                        ▼
┌──────────────────────────────────────────┐
│      split prediction unit PU based on     │
│           obtained information             │───530
└──────────────────────────────────────────┘
                        │
                        ▼
┌──────────────────────────────────────────┐
│ generate prediction partition by performing│
│          motion compensation               │───540
└──────────────────────────────────────────┘
                        │
                        ▼
┌──────────────────────────────────────────┐
│  reconstruct partition by adding generated │
│   prediction partition to residual value    │───550
└──────────────────────────────────────────┘
                        │
                        ▼
┌──────────────────────────────────────────┐
│   reconstruct current prediction unit PU by │
│   reconfiguring reconstructed partition     │───560
└──────────────────────────────────────────┘
                        │
                        ▼
                    ( End )
```

# FIG. 13

EP 2 942 959 A1

FIG. 14

# FIG. 15

## FIG. 16

EP 2 942 959 A1

Europäisches
Patentamt

European
Patent Office

Office européen
des brevets

# EUROPEAN SEARCH REPORT

Application Number

EP 15 16 7974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCCANN (ZETACAST / SAMSUNG) K ET AL: "Video coding technology proposal by Samsung (and BBC)", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A124, 1 June 2010 (2010-06-01), XP030007573, ISSN: 0000-0049 | 1-4,7 | INV. H04N19/119 H04N19/14 H04N19/176 |
| A | * sections 2.2.1, 2.2.2, 2.3.1; figures 2-1, 2-7 * ----- | 5,6 | |
| X | DAVIES (BBC) T ET AL: "Suggestion for a Test Model", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A033, 7 May 2010 (2010-05-07), XP030007526, ISSN: 0000-0049 * sections 2.1, 4.2; figure 1a * ----- | 1-7 | |
| A | US 2008/240246 A1 (LEE SANG-RAE [KR] ET AL) 2 October 2008 (2008-10-02) * paragraphs [0070] - [0082]; figure 12 * ----- | 1-7 | TECHNICAL FIELDS SEARCHED (IPC) H04N |

The present search report has been drawn up for all claims

| Place of search | Date of completion of the search | Examiner |
|---|---|---|
| Munich | 23 September 2015 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 15 16 7974

This annex lists the patent family members relating to the patent documents cited in  the above-mentioned European search report.
The members are as contained in the European Patent Office EDP file on
The European Patent Office is in no way liable for these particulars which are merely given for the purpose of information.

23-09-2015

| Patent document cited in search report | Publication date | Patent family member(s) | Publication date |
|---|---|---|---|
| US 2008240246 A1 | 02-10-2008 | KR 20080088039 A<br>US 2008240246 A1 | 02-10-2008<br>02-10-2008 |